(19) Europäisches Patentamt / European Patent Office / Office européen des brevets

(11) **EP 2 479 825 A1**

(12) **EUROPEAN PATENT APPLICATION**
published in accordance with Art. 153(4) EPC

(43) Date of publication:
**25.07.2012 Bulletin 2012/30**

(21) Application number: **10816992.1**

(22) Date of filing: **05.08.2010**

(51) Int Cl.:
*H01M 8/04* (2006.01)

(86) International application number:
**PCT/JP2010/063293**

(87) International publication number:
**WO 2011/033879 (24.03.2011 Gazette 2011/12)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **16.09.2009 JP 2009214321**

(71) Applicant: **Nissan Motor Co., Ltd.**
**Yokohama-shi, Kanagawa 221-0023 (JP)**

(72) Inventors:
• **MATSUMOTO, Michihiko**
  **Kanagawa 243-0123 (JP)**

• **SATO, Masashi**
  **Kanagawa 243-0123 (JP)**
• **NAKAYAMA, Ken**
  **Kanagawa 243-0123 (JP)**
• **HASEGAWA, Junichi**
  **Kanagawa 243-0123 (JP)**
• **HOSHI, Kiyoshi**
  **Kanagawa 243-0123 (JP)**

(74) Representative: **Grünecker, Kinkeldey, Stockmair & Schwanhäusser**
**Leopoldstrasse 4**
**80802 München (DE)**

(54) **CONTROL DEVICE AND CONTROL METHOD FOR FUEL CELL SYSTEM**

(57) Disclosed is a control device (40) for an anode non-circulation type fuel cell system including a fuel cell (1), a volume part (12) capable of temporarily storing an anode off-gas discharged from the fuel cell, a discharging device (14) for discharging the anode off-gas to an outside, and a temperature detector (43) for detecting a temperature of the fuel cell. The control device (40) includes an anode gas supply control unit (55) which controls the supply of an anode gas to the fuel cell. The anode gas supply control unit (55) includes an anode upper/lower limit pressure setting unit (61) which sets an anode upper limit pressure and an anode lower limit pressure, an anode pressure increase rate setting unit (62) which sets an anode pressure increase rate based on at least the temperature of the fuel cell detected by the temperature detector, and an anode gas pressure increase/decrease control unit (63) which repeats pressure increase and pressure decrease, the pressure increase being conducted by supplying the anode gas to the anode upper limit pressure at the anode pressure increase rate, the pressure decrease being conducted by restricting the supply of the anode gas to the anode lower limit pressure. When the temperature of the fuel cell detected by the temperature detector is lower than a predetermined temperature, the anode pressure increase rate setting unit (62) sets the anode pressure increase rate at a slower rate than when the temperature of the fuel cell is equal to or higher than the predetermined temperature.

FIG. 1

**Description**

TECHNICAL FIELD

The present invention relates to a control device and a control method for controlling operation of an anode non-circulation type fuel cell system.

BACKGROUND ART

An anode non-circulation type fuel cell system that supplies an anode gas to a fuel cell stack without circulating the anode gas has been known, as opposed to an anode circulation type fuel cell system that circulates and recycles an unreacted exhaust anode gas discharged from a fuel cell stack.
Japanese Patent Application Publication No. 2008-97966 discloses a technology for suppressing power generation degradation due to a deficiency in partial pressure of hydrogen in an anode catalyst layer in such an anode non-circulation type fuel cell system. The technology involves repeatedly increasing and decreasing the pressure for supplying an anode gas during electric power generation to produce a periodic flow of the gas through an anode gas flow path, thereby suppressing the retention of an inactive gas such as a nitrogen gas in some cells of a fuel cell stack.

SUMMARY OF THE INVENTION

TECHNICAL PROBLEM

However, if the above-described fuel cell system is used in a low-temperature environment including a below-freezing environment, the inactive gas retained in the fuel cell stack is not sufficiently discharged because of an influence of freezing of residual water in the fuel cell stack or the like, which in turn may possibly lead to the deficiency in the partial pressure of hydrogen in the anode catalyst layer and hence to the power generation degradation.
In view of the foregoing problem, an object of the present invention is to provide a control device and a control method for a fuel cell system, for use in an anode non-circulation type fuel cell system, capable of effectively suppressing a power generation degradation due to a deficiency in partial pressure of hydrogen in an anode catalyst layer even in a low-temperature environment, thereby improving power generation characteristics of fuel cells.

SOLUTION TO PROBLEM

A first aspect of the present invention is a control device for an anode non-circulation type fuel cell system including a fuel cell, a volume part capable of temporarily storing an anode off-gas discharged from the fuel cell, a discharging device for discharging the anode off-gas to an outside, and a temperature detector for detecting a temperature of the fuel cell. The control device includes an anode gas supply control unit which controls the supply of an anode gas to the fuel cell. The anode gas supply control unit includes an anode upper/lower limit pressure setting unit which sets an anode upper limit pressure and an anode lower limit pressure, an anode pressure increase rate setting unit which sets an anode pressure increase rate based on at least the temperature of the fuel cell detected by the temperature detector, and an anode gas pressure increase/decrease control unit which repeats pressure increase and pressure decrease, the pressure increase being conducted by supplying the anode gas to the anode upper limit pressure at the anode pressure increase rate, the pressure decrease being conducted by restricting the supply of the anode gas to the anode lower limit pressure. When the temperature of the fuel cell detected by the temperature detector is lower than a predetermined temperature, the anode pressure increase rate setting unit sets the anode pressure increase rate at a slower rate than when the temperature of the fuel cell is equal to or higher than the predetermined temperature.
A second aspect of the present invention is a control method for an anode non-circulation type fuel cell system including a fuel cell, a volume part capable of temporarily storing an anode off-gas discharged from the fuel cell, and a discharging device for discharging the anode off-gas to an outside, The control method includes the steps of: detecting a temperature of the fuel cell; setting an anode upper limit pressure and an anode lower limit pressure; setting an anode pressure increase rate based on at least the detected temperature of the fuel cell; and supplying an anode gas to the fuel cell in such a manner as to repeat pressure increase and pressure decrease, the pressure increase being conducted by supplying the anode gas to the anode upper limit pressure at the anode pressure increase rate, the pressure decrease being conducted by restricting the supply of the anode gas to the anode lower limit pressure. When the detected temperature of the fuel cell is lower than a predetermined temperature, the anode pressure increase rate is set at a slower rate than when the temperature of the fuel cell is equal to or higher than the predetermined temperature.

BRIEF DESCRIPTION OF DRAWINGS

[Fig. 1] Fig. 1 is a block diagram showing in outline a configuration of a fuel cell system to which the present invention is applied.

[Fig. 2] Fig. 2 is a flowchart showing the overall flow of a power generation control process performed by a controller.

[Fig. 3] Fig. 3 is a flowchart showing details of a target generated current calculation process at step S101 of Fig, 2.

[Fig. 4] Fig. 4 is a conceptual illustration of map data representing a relationship of target drive motor power to the amount of accelerator operation and vehicle speed.

[Fig. 5] Fig. 5 is a conceptual illustration of map data representing a relationship of the target generated current to be extracted from a fuel cell stack by an output extraction device, to target generated power to be generated by the fuel cell stack and the temperature of the fuel cell stack.

[Fig. 6] Fig. 6 is a flowchart showing details of a hydrogen control process at step S106 of Fig. 2.

[Fig, 7] Fig, 7 is a control block diagram of assistance in explaining a specific example of a method for calculating a target lower limit pressure.

[Fig. 8] Fig. 8 is a control block diagram of assistance in explaining a specific example of a method for calculating an anode pressure increase rate.

[Fig. 9] Fig. 9 is a conceptual illustration of map data representing a relationship between a power generation stop duration and a fifth correction coefficient.

[Fig. 10] Fig. 10 is a timing chart showing specific examples of movements of a target hydrogen gas pressure and an actual hydrogen gas pressure when the controller drives a hydrogen gas pressure regulating valve.

[Fig. 11] Fig. 11 is a conceptual illustration of map data representing a relationship of an opening degree of a purge valve to the temperature of the fuel cell stack and the actual hydrogen gas pressure.

[Fig. 12] Fig. 12 is a flowchart showing details of an air control process at step S107 of Fig. 2.

[Fig. 13] Fig. 13 is a conceptual illustration of map data representing a relationship of a target air flow rate to the target generated current and the actual hydrogen gas pressure.

[Fig. 14] Fig. 14 is a conceptual illustration of map data representing a relationship of air compressor command revolution speed to the target air flow rate and target air pressure.

[Fig. 15] Fig. 15 is a graph showing sensitivity to anode pressure increase rate, of power generation characteristics of a fuel cell stack 1 at the time of starting below freezing.

[Fig. 16] Fig. 16 is a graph showing sensitivity to the amount of water remaining in an anode, of the power generation characteristics of the fuel cell stack 1 at the time of starting below freezing.

[Fig. 17] Fig. 17 is a graph showing sensitivity to a period of time during which the fuel cell stack 1 is allowed to stand, of the power generation characteristics of the fuel cell stack 1 at the time of starting below freezing.

[Fig. 18] Fig. 18 is a graph showing sensitivity to anode pressure, of the power generation characteristics of the fuel cell stack 1 at the time of starting below freezing,

DESCRIPTION OF EMBODIMENTS

Specific embodiments of the present invention will be described in detail below with reference to the drawings.

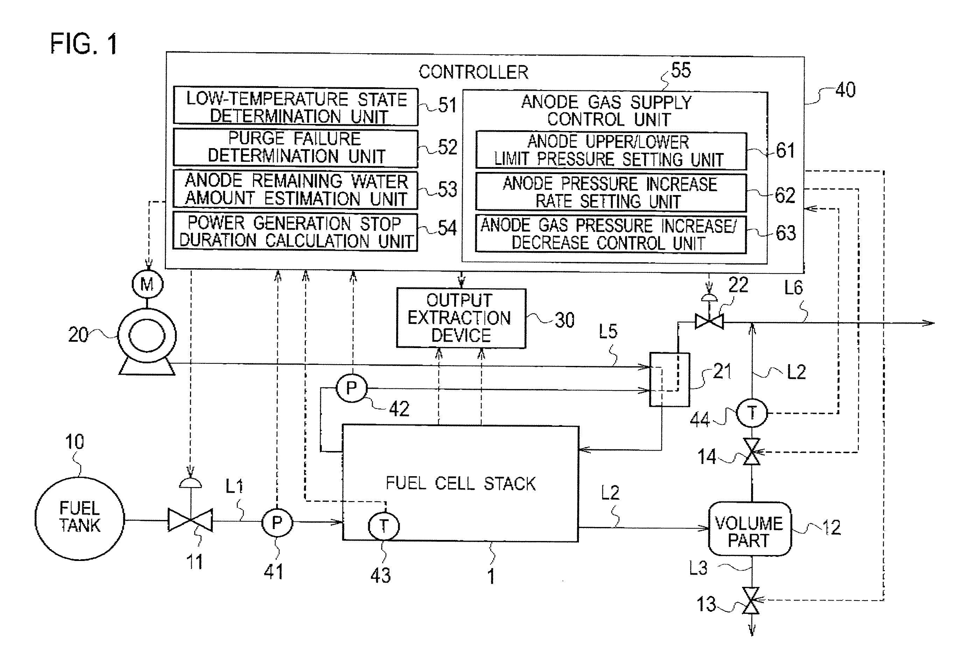

Fig, 1 is a block diagram showing in outline a configuration of a fuel cell system to which the present invention is applied. For example, the fuel cell system shown in Fig. 1 is mounted on a fuel cell vehicle as a drive source thereof, serves to supply electric power to electrical loading devices such as a drive motor of the fuel cell vehicle and auxiliaries internal to the system, and includes a fuel cell stack 1 constructed of a stack of a plurality of fuel cells.

Each of the fuel cells that form the fuel cell stack 1 includes a membrane electrode assembly in which a hydrogen electrode (or an anode) that is supplied with, for example, a hydrogen gas (or an anode gas) and an air electrode (or a cathode) that is supplied with, for example, air as an oxidizer gas are disposed opposite to each other with a solid polymer electrolyte membrane in between, sandwiched between separators. The separators of each of the fuel cells that form the fuel cell stack 1 are provided on the anode side with an anode gas flow path through which the hydrogen gas flows, and on the cathode side with an air flow path through which the air flows. Then, the fuel cell stack I is supplied with the hydrogen gas containing hydrogen on the anode side of each fuel cell and with the air containing oxygen on the cathode side thereof thereby to generate electric power by electrochemical reaction represented as the following formulae (1) and (2).

$$\text{The anode: } H_2 \rightarrow 2H^+ + 2e^- \qquad (1)$$

The cathode: $2H^+ + 2e^- + (1/2)O_2 \rightarrow H_2O$ (2)

Besides including the fuel cell stack 1 for electric power generation, the fuel cell system includes a hydrogen system for supplying the hydrogen gas to the fuel cell stack 1, an air system for supplying the air to the fuel cell stack 1, an output extraction device 30 that controls an output (e.g. an electric current) extracted from the fuel cell stack 1, and a controller 40 that performs centralized control on the overall operation of the system,

In the hydrogen system, the hydrogen gas as the anode gas is stored in a fuel tank 10 (e.g. a high-pressure hydrogen cylinder), and is supplied from the fuel tank 10 through a hydrogen gas supply line L1 (or an anode inlet flow path) to the fuel cell stack 1. Specifically, the hydrogen gas supply line L1 is connected at one end to the fuel tank 10 and at the other end to the inlet side of an anode gas supply manifold of the fuel cell stack 1. The hydrogen gas supply line L1 is provided with a main tank valve (not shown) downstream from the fuel tank 10. When the main tank valve is turned to its open position, a high-pressure hydrogen gas from the fuel tank 10 is mechanically reduced in pressure to a predetermined pressure by a pressure reducing valve (not shown) disposed downstream from the fuel tank 10. The hydrogen gas under a reduced pressure is further reduced in pressure by a hydrogen gas pressure regulating valve 11 disposed downstream from the pressure reducing valve, and, thereafter, is supplied to the fuel cell stack 1. The hydrogen gas pressure supplied to the fuel cell stack 1, that is, the hydrogen gas pressure (or anode pressure) in the anode of the fuel cell stack 1, can be adjusted by controlling the opening degree of the hydrogen gas pressure regulating valve 11.

In the fuel cell system of the embodiment, the fuel cell stack 1 is basically closed off on the outlet side that communicates with the outside of an anode gas discharge manifold, thereby to restrict a discharge of an anode off-gas from the fuel cell stack 1. In short, the fuel cell system of the embodiment is what is called an anode non-circulation type fuel cell system that supplies the hydrogen gas as the anode gas to the fuel cell stack 1 without circulating the hydrogen gas. However, this does not refer to "closing off" in the strict sense, and a discharge system that exceptionally opens the outlet side of the anode gas discharge manifold is provided in order to discharge impurities including an inactive gas such as nitrogen and liquid water from the anode. Specifically, an anode off-gas flow path L2 is connected to the outlet side of the anode gas discharge manifold. The anode off-gas flow path L2 is connected at the other end to an oxidant off-gas flow path L6 to be described later.

The anode off-gas flow path L2 is provided with a volume part 12 having as an internal space, a predetermined volume, for example, about the same volume as the whole or about 80 percent of the inner volume of the anode sides of the fuel cells that form the fuel cell stack 1. The volume part 12 functions as a buffer to temporarily store the anode off-gas discharged from the anodes, A drainage line L3 opened at one end is connected to a vertically lower portion of the volume part 12. The drainage line L3 is provided with a drain valve 13. Liquid water contained in the anode off-gas flowing into the volume part 12 accumulates in the lower portion of the volume part 12. The accumulated liquid water can be discharged to the outside by controlling the open and closed positions of the drain valve 13. Also, the anode off-gas flow path L2 is provided with a purge valve 14 (or a discharging device) on the downstream side from the volume part 12. The anode off-gas flowing into the volume part 12, specifically the gas containing impurities (mainly, an inactive gas such as nitrogen) and unreacted hydrogen, can be discharged to the outside by controlling the open and closed positions of the purge valve 14.

Meanwhile, in the air system, the air as the oxidizer gas, for example, the air in the atmosphere, is supplied through an air supply line L5 to the fuel cell stack 1 by an air compressor 20 taking in the air and thereby pressurizing the air. The air supply line L5 is connected at one end to the air compressor 20 and at the other end to the inlet side of an air supply manifold of the fuel cell stack 1. Also, the air supply line L5 is provided with a humidifying device 21 for humidifying the air supplied to the fuel cell stack 1,

The cathode off-gas flow path L6 is connected to the outlet side of the air supply manifold of the fuel cell stack 1. A cathode off-gas from the fuel cell stack 1 is discharged to the outside through the cathode off-gas flow path L6. The cathode off-gas flow path L6 is provided with the humidifying device 21, where the cathode off-gas is dehumidified to remove part of moisture produced by electric power generation from the cathode off-gas. (The removed moisture is used to humidify the supplied air.) Also, the cathode off-gas flow path L6 is provided with an air pressure regulating valve 22 on the downstream side from the humidifying device 21. Ail pressure supplied to the fuel cell stack 1, that is, the air pressure (or cathode pressure) in the cathode of the fuel cell stack 1, can be adjusted by controlling the opening degree of the air pressure regulating valve 22.

In the fuel cell system of the embodiment, electric power generated by the fuel cell stack 1 is supplied via the output extraction device 30 for example to the drive motor (not shown) for driving the vehicle or various auxiliaries required for power generation operation of the fuel cell stack 1. Also, electric power extracted from the fuel cell 1 under control of the output extraction device 30 is supplied to a secondary battery (not shown). The secondary battery is prepared to make up for a deficiency in electric power supplied from the fuel cell stack 1 at the time of starting of the system, transient response, or the like.

The controller 40 serves the function of performing centralized control on the overall operation of the system, and operates according to a control program thereby to control the operating state of the system. A microcomputer configured mainly by including CPU (central processing unit), ROM (read only memory), RAM (random access memory), and an I/O (input-output) interface may be used as the controller 40. The controller 40 performs various operations according to control programs stored in the ROM, and outputs results as control signals to various actuators (not shown). Thereby, the controller 40 controls various elements including the hydrogen gas pressure regulating valve 11, the drain valve 13, the purge valve 14, the air compressor 20, the air pressure regulating valve 22, and the output extraction device 30 thereby to control the power generation operation of the fuel cell stack 1,

The controller 40 receives inputs of sensor signals from various sensors and the like in order to detect the state of the system. The sensors for detecting the state of the system include, for example, a hydrogen gas pressure sensor 41, an air pressure sensor 42, a stack temperature sensor 43, and a purge valve temperature sensor 44. The hydrogen gas pressure sensor 41 detects the pressure of the hydrogen gas supplied to the fuel cell stack 1. The air pressure sensor 42 detects the pressure of the air supplied to the fuel cell stack 1. The stack temperature sensor 43 detects the temperature of the fuel cell stack 1. The purge valve temperature sensor 44 detects the temperature in the vicinity of the purge valve 14.

In the fuel cell system of the embodiment, under control of the controller 40, the hydrogen gas as the anode gas is supplied from the hydrogen system to the fuel cell stack 1, and the air as the oxidizer gas is supplied from the air system to the fuel cell stack 1, whereby the fuel cell stack 1 performs electric power generation. In this case, the controller 40 controls the supply of the hydrogen gas and the air so that the pressures of the hydrogen gas and the air supplied to the fuel cell stack 1 reach a desired operating pressure. Here, the controller 40 increases and decreases the pressure of the hydrogen gas supplied to the fuel cell stack 1, that is, the anode pressure, between upper and lower limit pressures set so that a pressure difference from the pressure on the cathode side is equal to or less than an allowable withstand pressure, thereby to enable an efficient discharge of impurities including an inactive gas such as nitrogen and liquid water into the volume part 12 disposed in the anode off-gas flow path L2. Then, particularly in the embodiment, the controller 40, when increasing and decreasing the anode pressure, determines whether or not the temperature of the fuel cell stack 1 is lower than a predetermined temperature, indicating that the temperature of the fuel cell stack 1 is in a low-temperature state including a below-freezing state, based on the sensor signal from the stack temperature sensor 43, and, when the temperature of the fuel cell stack 1 is lower than the predetermined temperature, the rate of increase in the anode pressure is set at a slower rate, as compared to when the temperature of the fuel cell stack 1 is equal to or higher than the predetermined temperature. Description will be given below in further detail with regard to control performed by the controller 40.

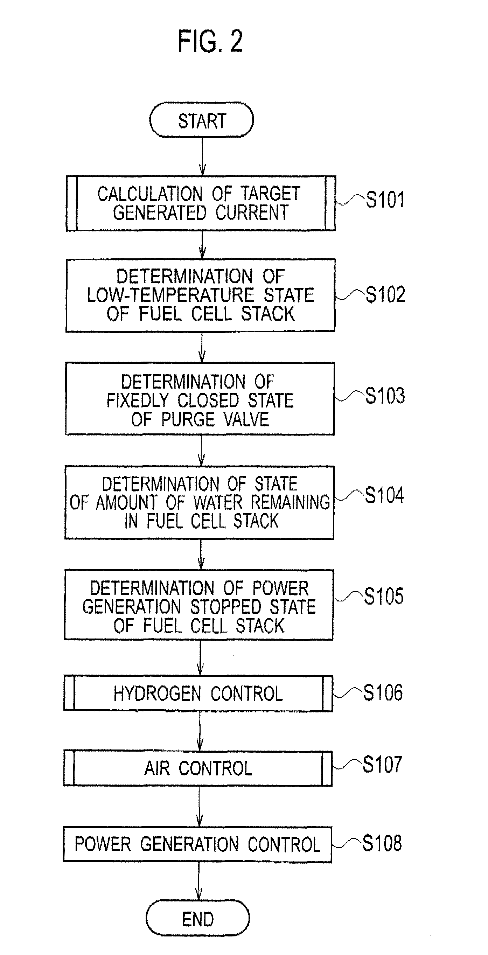

Fig. 2 is a flowchart showing the overall flow of a power generation control process performed by the controller 40. The process shown in the flowchart of Fig. 2 is repeatedly executed at predetermined time intervals (for example, at intervals of 10 [ms]).

When the flow of Fig. 2 starts, first at step S101, the controller 40 calculates a target generated current to be extracted from the fuel cell stack 1, from power consumption by the drive motor, the auxiliaries for assisting in electric power generation of the fuel cell stack 1, and the like, in order to realize a driving force requested by a driver of the fuel cell vehicle.

Then, at step S102, the controller 40 determines whether or not the fuel cell stack 1 is in the below-freezing state, that is, whether or not water remaining in the fuel cell stack 1 is partially or wholly in a frozen state inside the fuel cells. Specifically, it is determined whether or not a temperature detection value, obtained by the stack temperature sensor 43 is less than a first threshold value (or the predetermined temperature). Then, if the temperature detection value is less than the first threshold value, it is determined that the fuel cell stack 1 is in the below-freezing state, and "1" is assigned to a below-freezing state flag, or if the temperature detection value is equal to or more than the first threshold value, it is determined that the fuel cell stack 1 is not in the below-freezing state, and "0" is assigned to the below-freezing state flag. Here, it is desirable that the first threshold value for determining whether or not the fuel cell stack 1 is in the below-freezing state be set at a freezing temperature plus an error of temperature, taking into account an error due to the installed position of the stack temperature sensor 43 to the fuel cell stack 1 or a detection error of the stack temperature sensor 43 in itself, in order to make more accurate determination.

Then, at step S103, the controller 40 determines whether or not the purge valve 14 is in a fixedly closed state due to freezing or the like. Specifically, it is determined whether or not a temperature detection value obtained by the purge valve temperature, sensor 44 is less than a second threshold value, and then, if the temperature detection value is less than the second threshold value, it is determined that the purge valve 14 may possibly be fixedly closed, and "1" is assigned to a purge failure flag, or if the temperature detection value is equal to or more than the second threshold value, "0" is assigned to the purge failure flag. Here, it is desirable that the second threshold value for determining whether or not the purge valve 14 is in the fixedly closed state due to freezing or the like be set at the freezing temperature plus an error of temperature, taking into account an error due to the installed position of the purge valve temperature sensor 44 to the purge valve 14 or a detection error of the purge valve temperature sensor 44 in itself, in order to make more accurate determination.

Then, at step S104, the controller 40 determines the state of the amount of water remaining in the fuel cell stack 1. This determination, for example if made at the time of starting of the fuel cell system, can be accomplished by doing monitoring to determine whether or not a drying process for discharging produced water remaining in the fuel cell stack 1 has been performed during the previous power generation stop process. Specifically, in a situation such as when at the next starting time the fuel cell stack 1 needs to generate electric power under a below-freezing condition, during the previous power generation stop process the air is supplied to the fuel cell stack 1 by the air compressor 20 thereby to perform the drying process for discharging the produced water remaining in the fuel cell stack 1; when such a drying process has not been carried out during the previous power generation stop process, it is determined that there is a large amount of water remaining in the fuel cell stack 1, and "1" is assigned to a wetting flag, or when the drying process has been carried out during the previous power generation stop process, "0" is assigned to the wetting flag. Incidentally, the determination of the state of the amount of water remaining in the fuel cell stack 1 is not limited to being made according to whether or not the drying process has been carried out as described above but may use, for example, a method that includes estimating a resistance value of a solid-state polymer membrane of the fuel cell stack 1 by using an alternating current impedance method that includes applying an alternating current signal of a high frequency component to the fuel cell stack 1 and thereby estimating impedance from a relationship with the behavior of the voltage signal, and determining the wet state of the solid-state polymer membrane based on the resistance value of the solid-state polymer membrane, thereby determining the value of the wetting flag.

Then, at step S105, the controller 40 acquires the duration of the power generation stopped state of the fuel cell stack 1. Incidentally, the duration of power generation stop may be determined by actual measurement of the duration between the previous stop time of power generation and the next start time of power generation, or may be estimated from the state of the fuel cell stack 1 at the start time of power generation.

Then, at step S106, the controller 40 calculates a target hydrogen gas pressure based on results of the target generated current calculated at step S101 and the below-freezing flag, the purge failure flag, the wetting flag and the duration of the power generation stopped state calculated at steps S102, S103, S104 and S105, respectively, and controls the opening degree of the hydrogen gas pressure regulating valve 11 and also repeats opening and closing operation of the purge valve 14 thereby to discharge an inactive gas such as a nitrogen gas, in order that the actual hydrogen gas pressure detected by the hydrogen gas pressure sensor 41 follows the target hydrogen gas pressure.

Then, at step S107, the controller 40 supplies the air to the cathode by using the air compressor 20, and controls the opening degree of the air pressure regulating valve 22 so that the pressure difference between the anode side and the cathode side is equal to or less than a differential pressure tolerance of the fuel cell stack 1.

Then, at step S108, the controller 40 controls the output extraction device 30 so that an electric current is extracted from the fuel cell stack 1, based on the target generated current calculated at step S101. At this point, the power generation control process comes to an end.

Incidentally, as shown in Fig. 1, the controller 40 includes a low-temperature state determination unit 51, a purge failure determination unit 52, an anode remaining water amount estimation unit 53, a power generation stop duration calculation unit 54, and an anode gas control unit 55, and, for example, step S102 may be executed by the low-temperature state determination unit 51; step S103, the purge failure determination unit 52; step S104, the anode remaining water amount estimation unit 53; step S105, the power generation stop duration calculation unit 54; and step S106, the anode gas control unit 55.

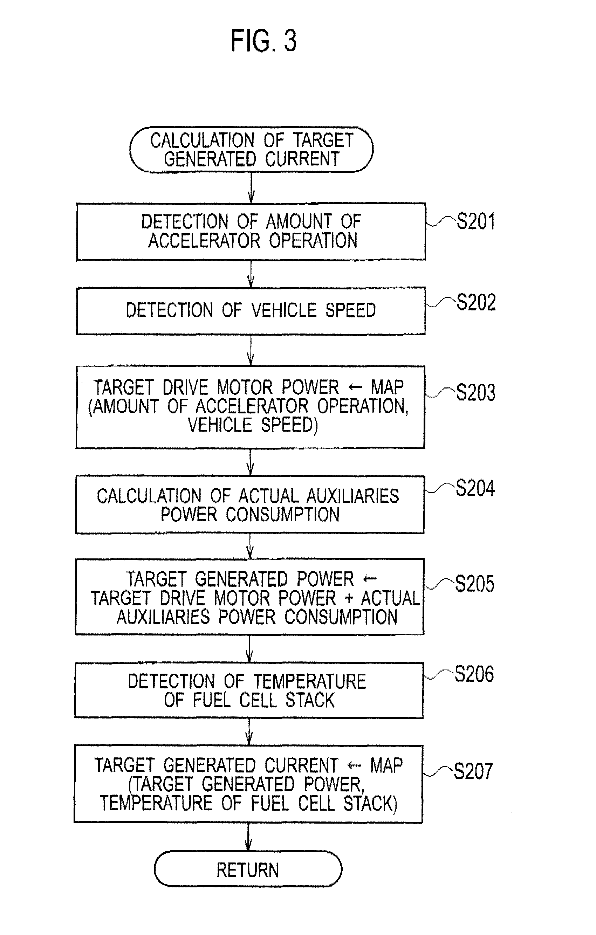

Fig. 3 is a flowchart showing details of a target generated current calculation process at step S101 of Fig. 2. Description will be given below in further detail with regard to calculation of the target generated current to be extracted from the fuel cell stack 1 by the output extraction device 30, following the flowchart of Fig. 3.

When the flow of Fig. 3 starts, first at step S201, the controller 40 detects the amount of accelerator operation by the driver, based on an output from an accelerator sensor installed in the fuel cell vehicle.

Then, at step S202, the controller 40 detects the speed of the fuel cell vehicle, based on an output from a speed sensor installed in the fuel cell vehicle.

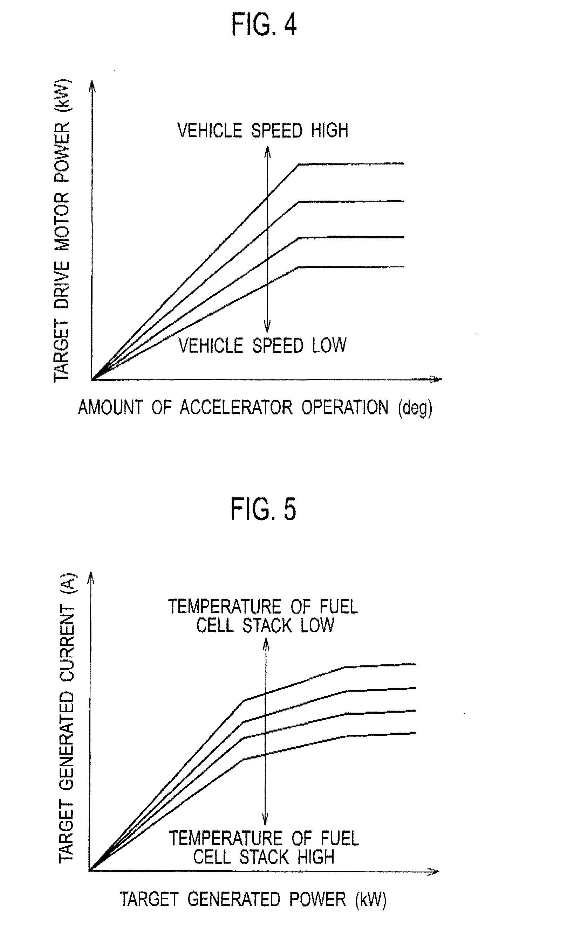

Then, at step S203, the controller 40 calculates target drive motor power, using map data shown in Fig. 4, based on the amount of accelerator operation and the vehicle speed detected at steps S201 and S202, respectively.

Then, at step S204, the controller 40 calculates electric power actually consumed by the auxiliaries (i.e. actual auxiliaries power consumption). The actual auxiliaries power consumption refers to auxiliaries power consumption calculated by detecting the voltage and current of each of the auxiliaries for electric power generation of the fuel cell stack 1, and multiplying the voltage and the current together, and, for example for the air compressor 20 or the like, the actual auxiliaries power consumption is calculated by detecting revolution speed and torque, and adding power loss to a value obtained by multiplying the revolution speed and the torque together. The power loss is estimated by inputting the revolution speed and the torque to loss map data.

Then, at step S205, the controller 40 calculates target generated power to be generated by the fuel cell stack 1. The target generated power is an electric power value obtained by adding together the target drive motor power calculated at step S203 and the actual auxiliaries power consumption calculated at step S204.

Then, at step S206, the controller 40 detects the temperature of the fuel cell stack 1 by reading the sensor signal from the stack temperature sensor 43.

Then, at step S207, the controller 40 calculates the target generated current to be extracted from the fuel cell stack 1 by the output extraction device 30, using map data shown in Fig. 5, based on the target generated power to be generated by the fuel cell stack 1 calculated at step S205 and the temperature of the fuel cell stack 1 detected at step S206. At this point, the target generated current calculation process comes to an end.

Incidentally, description has been given above with regard to the target generated current calculation process under normal operating conditions after the starting of the fuel cell system; however, at the time of starting of the fuel cell system, the target generated power calculated at step S205 is the actual auxiliaries power consumption alone. Specifically, at the time of starting of the fuel cell system, at step S201 the amount of accelerator operation is detected to be 0, and at step S202 the vehicle speed is detected to be 0, so that at step S203 the target drive motor power works out to 0. Then, at step S205, the actual auxiliaries power consumption calculated at step S204, as it is, works out to the target generated power.

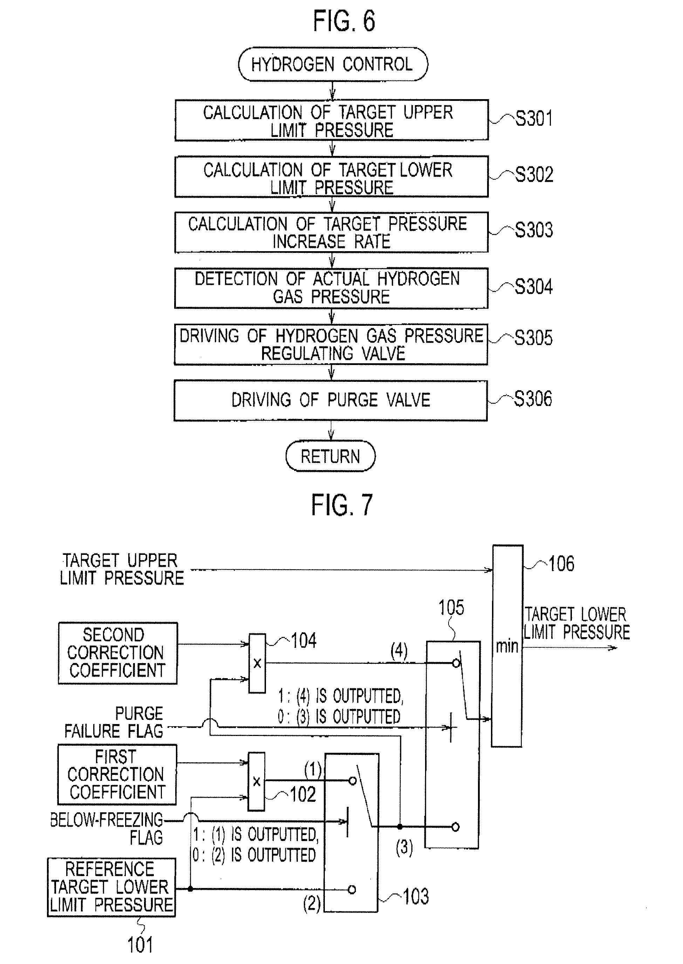

Fig. 6 is a flowchart showing details of a hydrogen control process at step S106 of Fig. 2. Description will be given below in further detail with regard to a method for controlling the supply of the hydrogen gas to the anode by driving the hydrogen gas pressure regulating valve 11 and the purge valve 14, following the flowchart of Fig. 3.

When the flow of Fig. 6 starts, first at step S301, the controller 40 calculates a target value of an upper limit pressure for the supply of the hydrogen gas to the fuel cell stack 1 (which is an upper limit value of the target hydrogen gas pressure and is referred to as a target upper limit pressure or an anode upper limit pressure). Here, an upper limit value of the allowable withstand pressure of the fuel cell stack 1 is set as the target upper limit pressure (or the anode upper limit pressure), and thereby, the supply of the hydrogen gas is provided up to the highest possible anode pressure, using the hydrogen gas pressure regulating valve 11, to suppress a power generation degradation of the fuel cell stack 1 due to a deficiency in partial pressure of hydrogen in an anode catalyst layer. Also, for example, the target upper limit pressure may be set to a variable, based on the target generated current, at level such that a required concentration of hydrogen can be ensured in the anode catalyst layer, when it is desired to reduce an air operating pressure to low level or do the like, besides reducing a membrane-membrane differential pressure between the cathode and the anode of the fuel cell stack 1 to the allowable withstand pressure or lower, in order to suppress power consumption by the air compressor 20; because a lower target generated current yields also a smaller amount of hydrogen consumed required for electric power generation and hence tends to permit ensuring the partial pressure of the hydrogen required for the electric power generation even with a low concentration of hydrogen in the anode catalyst layer.

Then, at step S302, the controller 40 calculates a target value of a lower limit pressure for the supply of the hydrogen gas to the fuel cell stack 1 (which is a lower limit value of the target hydrogen gas pressure and is referred to as a target lower limit pressure or an anode lower limit pressure). Here, the target value of the lower limit pressure is set based on the value of the below-freezing flag calculated at step S102 of Fig. 2 and the value of the purge failure flag calculated at step S103 of Fig. 2.

Description will now be given with regard to a specific example of a method for calculating the target lower limit pressure (or the anode lower limit pressure), using a control block diagram of Fig. 7.

To calculate the anode lower limit pressure, calculation of a reference target lower limit pressure is first performed (at block 101 of Fig. 7), As employed here, the "reference" refers to a state in which both the below-freezing flag and the purge failure flag are "0," and therefore, the reference target lower limit pressure refers to the target lower limit pressure when the fuel cell stack 1 is not in the below-freezing state and also the purge valve 14 is not fixedly closed. Then, the lowest pressure such that the power generation degradation due to the deficiency in the partial pressure of the hydrogen in the anode catalyst layer does not occur when the target generated current is extracted from the fuel cell stack 1 under a condition where the fuel cell stack 1 is not in the below-freezing state and also the purge valve 14 is not fixedly closed is set as the reference target lower limit pressure. Also, for example, the reference target lower limit pressure may be set to a variable, based on the target generated current, at level such that a required concentration of hydrogen can be ensured in the anode catalyst layer, when it is desired to reduce the air operating pressure to low level or do the like, besides reducing the membrane-membrane differential pressure between the cathode and the anode of the fuel cell stack 1 to the allowable withstand pressure or lower, in order to suppress the power consumption by the air compressor 20; because a lower target generated current yields also a smaller amount of hydrogen consumed required for electric power generation and hence tends to permit ensuring the partial pressure of the hydrogen required for the electric power generation even with a low concentration of hydrogen in the anode catalyst layer. Further, for example, the reference target lower limit pressure may be set to a variable, using map data into which either an integrated value of the amount of discharge from the purge valve 14 determined from the hydrogen gas pressure sensor 41 and the open and closed positions of the purge valve 14 or the duration of the supply of the hydrogen gas since the start thereof is an input, when it is desired to reduce the air operating pressure to low level or do the like, besides reducing the membrane-membrane differential pressure between the cathode and the anode of the fuel cell stack 1 to the allowable withstand pressure or lower, in order to suppress the power consumption by the air compressor 20; because, under a condition where the fuel cell stack 1 can sufficiently discharge an inactive gas such as a nitrogen gas to the outside by the opening and closing operation of the purge valve 14, the target lower limit pressure may be set lower within a range such that the power generation degradation does not occur.

Then, calculation of the target lower limit pressure when the below-freezing flag is "1" is performed (at block 102 of Fig. 7). Here, the reference target lower limit pressure calculated at block 101 is multiplied by a first correction coefficient to calculate the target lower limit pressure when the below-freezing flag is "1." Here, the first correction coefficient is set to a fixed value more than 1. Thus, the target lower limit pressure when the below-freezing flag is "1" is calculated to be a higher value than the reference target lower limit pressure. When the below-freezing flag is "1," that is, when the fuel cell stack 1 is in the below-freezing state, factors such as the fact that water remaining in the anode is frozen and difficult to discharge and the fact that a temperature drop causes a deterioration in gas diffusivity cause a drop in the partial pressure of the hydrogen in the anode catalyst layer and hence increase the likelihood of the power generation degradation occurring. The first correction coefficient is set to a value such that the power generation degradation can be suppressed, by setting the target lower limit pressure higher by the amount corresponding to the drop in the partial pressure of the hydrogen in the anode catalyst layer caused by the above-mentioned factors. Here, the first correction coefficient is set based on experiment or design so that the fuel cell stack 1 can be established as the fuel cell even in environment at a possible lower limit temperature (e.g. -20°C). Also, for example, the first correction coefficient may be set to a variable based on map data based on the temperature detection value obtained by the stack temperature sensor 43, so that the first correction coefficient becomes smaller as the temperature becomes higher, taking into account the influence of the gas diffusivity improving with increasing temperature.

Then, either the reference target lower limit pressure calculated at block 101 or the target lower limit pressure calculated at block 102 is selected based on the value of the below-freezing flag (at block 103 of Fig. 7). Specifically, at block 103, when the value of the below-freezing flag is "1," the target lower limit pressure calculated at block 102 is outputted, or when the value of the below-freezing flag is "0," the reference target lower limit pressure calculated at block 101 is outputted.

Then, calculation of the target lower limit pressure when the purge failure flag is "1" is performed (at block 104 of Fig. 7). Here, the target lower limit pressure selected at block 103 is multiplied by a second correction coefficient to calculate the target lower limit pressure when the purge failure flag is "1." Here, the second correction coefficient is set to a fixed value more than 1. Thus, the target lower limit pressure when the purge failure flag is "1" is calculated to be a higher value than the target lower limit pressure selected at block 103, which in turn enables suppressing the power generation degradation due to the deficiency in the partial pressure of the hydrogen in the anode catalyst layer, even if the purge valve 14 is fixedly closed due to the influence of freezing or the like. When the purge failure flag is "1," that is, when the purge valve 14 is fixedly closed, until the purge valve 14 is warmed and unfrozen by self-heating by electric power generation of the fuel cell stack 1 or the like, an inactive gas such as a nitrogen gas penetrates from the cathode side into the anode side, thus causing a drop in the partial pressure of the hydrogen in the anode catalyst layer and hence increasing the likelihood of the power generation degradation occurring. The second correction coefficient is set based on experiment or design so that the target lower limit pressure after the correction reaches such pressure as to enable ensuring the partial pressure of the hydrogen in the anode catalyst layer and thus suppressing the power generation degradation, even when the inactive gas penetrates from the cathode side into the anode side until after a lapse of the longestgeneration degradation time required to unfreeze the purge valve 14.

Then, either the target lower limit pressure selected at block 103 or the target lower limit pressure calculated at block 104 is selected based on the value of the purge failure flag (at block 105 of Fig. 7). Specifically, at block 105, when the value of the purge failure flag is "1," the target lower limit pressure calculated at block 104 is outputted, or when the value of the purge failure flag is "0," the target lower limit pressure selected at block 103 is outputted.

Then, an output of block 105 is limited by the target upper limit pressure so as not to output a value equal to or more than the target upper limit pressure calculated at step S301 as the target lower limit pressure (at block 106 of Fig. 7).

When the target lower limit pressure is calculated as described above, then at step S303, the controller 40 calculates a target pressure increase rate for the supply of the hydrogen gas to the fuel cell stack 1 (which is a target value of a pressure increase rate for an increase of the target hydrogen gas pressure and will hereinafter be sometimes called an anode pressure increase rate). Here, the anode pressure increase rate is set based on the value of the below-freezing flag calculated at step S102 of Fig. 2, the value of the wetting flag calculated at step S104 of Fig. 2, and the value of the power generation stop duration calculated at step S105 of Fig. 2.

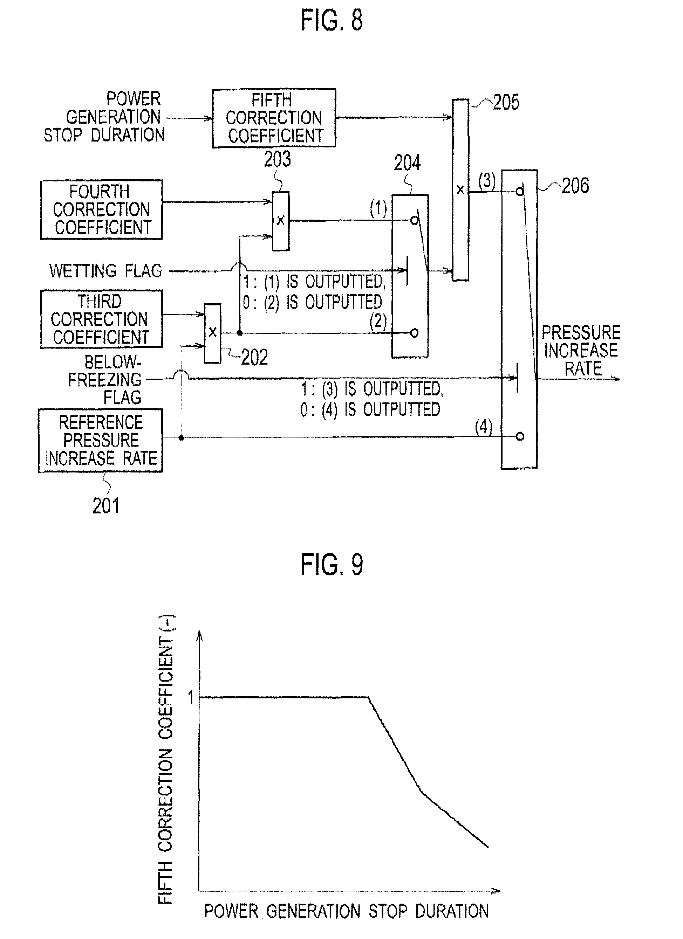

Description will now be given with regard to a specific example of a method for calculating the anode pressure increase rate, using a control block diagram of Fig. 8.

To calculate the anode pressure increase rate, calculation of a reference pressure increase rate is first performed (at block 201 of Fig. 8). As employed here, the "reference" refers to a state in which the below-freezing flag is "0," and therefore, the reference pressure increase rate refers to the anode pressure increase rate when the fuel cell stack 1 is not in the below-freezing state. Here, when the supply of the hydrogen gas starts under a condition where at the time of starting of the fuel cell system both the anode and the cathode of the fuel cell stack 1 are contaminated with oxygen, a region where the hydrogen is present and a region where the hydrogen is absent (hereinafter, a hydrogen front) are formed in the anode. Then, in the region where the hydrogen is supplied to the anode, the same reaction as that under normal operating conditions occurs to develop a potential on the cathode side. Meanwhile, in the region where the hydrogen is absent from the anode, reaction represented as the following formula (3) occurs on the cathode side facing this region, resulting in the occurrence of corrosion of a carbon carrier carrying a catalyst such as platinum (Pt), or the like.

$$C + 2H_2O \rightarrow CO_2 + 4H^+ + 4e^- \qquad (3)$$

It is therefore desirable that the reference pressure increase rate be set to the fastest rate controllable with the hydrogen gas pressure regulating valve 11 in order to minimize a period of time during which the hydrogen front is formed at the time of starting of the fuel cell system and thereby suppress the occurrence of the carbon corrosion by the above-described phenomenon. Also, when the below-freezing flag is "0," water remaining in the fuel cell stack 1 can possibly be present in a liquid state, and hence it is desirable that the reference pressure increase rate be set to the fastest possible rate also from the viewpoint of an efficient discharge of the remaining water in the liquid state.

Then, calculation of the anode pressure increase rate when the below-freezing flag is "1" is performed (at blocks 202 to 205 of Fig. 8).

Specifically, first, the anode pressure increase rate when the wetting flag is "0" is calculated (at block 202 of Fig. 8). Here, the reference pressure increase rate calculated at block 201 is multiplied by a third correction coefficient to calculate the anode pressure increase rate when the wetting flag is "0." Here, the third correction coefficient is set to a fixed value less than 1. Thus, the anode pressure increase rate when the wetting flag is "0" is calculated to be a slower rate than the reference pressure increase rate calculated at block 201. When the below-freezing flag is "1" and also the wetting flag is "0," that is, when the fuel cell stack 1 is in the below-freezing state at the starting time under a condition where the drying process for eliminating produced water remaining in the fuel cell stack 1 has been performed during the previous power generation stop process, factors such as the fact that water remaining in the anode is frozen and difficult to discharge and the fact that a temperature drop causes a deterioration in gas diffusivity cause a drop in the partial pressure of the hydrogen in the anode catalyst layer and hence increase the likelihood of the power generation degradation occurring. The third correction coefficient is set based on experiment or design so that the fuel cell stack 1 can be established as the fuel cell even if the above-described situation arises in environment at a possible lower limit temperature (e.g. -20°C). The anode pressure increase rate is reduced thereby to enable increasing the length of time for discharge of an inactive gas such as a nitrogen gas remaining in the fuel cell stack 1 into the volume part 12, and also, at the time of the supply of the hydrogen gas to the fuel cell stack 1, variation in the flow rate of the supplied hydrogen gas due to variation in pressure loss between fuel cells is suppressed thereby to enable suppressing the power generation degradation due to the drop in the partial pressure of the hydrogen in the anode catalyst layer.

Then, the anode pressure increase rate when the wetting flag is "1" is calculated (at block 203 of Fig. 8). Here, the anode pressure increase rate calculated at block 202 is multiplied by a fourth correction coefficient to calculate the anode pressure increases rate when the wetting flag is "1." Here, the fourth correction coefficient is set to a fixed value less than 1. Thus, the anode pressure increase rate when the wetting flag is "1" is calculated to be a slower rate than that when the wetting flag is "0." When the below-freezing flag is "1" and also the wetting flag is "1," that is, when the fuel cell stack 1 is in the below-freezing state at the starting time under a condition where the drying process for eliminating produced water remaining in the fuel cell stack 1 has not been performed during the previous power generation stop process, factors such as the fact that a larger amount of water than that when the wetting flag is "0" remains in the anode and is frozen and difficult to discharge cause a drop in the partial pressure of the hydrogen in the anode catalyst layer and hence increase the likelihood of the power generation degradation occurring. The fourth correction coefficient is set based on experiment or design so that the fuel cell stack 1 can be established as the fuel cell even if the above-described situation arises in environment at a possible lower limit temperature (e.g. -20°C). The anode pressure increase rate is reduced thereby to enable increasing the length of time for discharge of an inactive gas such as a nitrogen gas remaining in the fuel cell stack 1 into the volume part 12, and also, at the time of the supply of the hydrogen gas to the fuel cell stack 1, variation in the flow rate of the supplied hydrogen gas due to variation in pressure loss between fuel cells is suppressed thereby to enable suppressing the power generation degradation due to the drop in the partial pressure of the hydrogen in the anode catalyst layer.

Then, either the anode pressure increase rate calculated at block 202 or the anode pressure increase rate calculated at block 203 is selected based on the value of the wetting flag (at block 204 of Fig. 8). Specifically, at block 204, when the value of the wetting flag is "1," the anode pressure increase rate calculated at block 203 is outputted, or when the value of the wetting flag is "0," the anode pressure increase rate calculated at block 202 is outputted.

Then, the anode pressure increase rate selected at block 204 is subjected to correction according to the power generation stop duration (at block 205 of Fig. 8). Here, an output from block 204 is multiplied by a fifth correction coefficient to perform the correction of the anode pressure increase rate. Here, the fifth correction coefficient is set within a range of values not exceeding 1, using map data based on the power generation stop duration as shown in Fig. 9. Thus, when the power generation stop duration becomes longer than expected, such as when the system is allowed to stand for a long time, the anode pressure increase rate is restricted to be low, After the cell stack 1 has stopped electric power generation, a distribution of water in the cell stack 1 changes with lapse of the power generation stop duration to thus produce a situation where the supply of the hydrogen into the anode catalyst layer becomes more difficult; however, the anode pressure increase rate is reduced thereby to enable discharging a larger amount of inactive gas into the volume part 12 and thus suppressing the power generation degradation due to the deficiency in the partial pressure of the hydrogen in the anode catalyst layer.

Then, either the reference pressure increase rate calculated at block 201 or the anode pressure increase rate calculated at block 205 is selected based on the value of the below-freezing flag (at block 206 of Fig. 8). Specifically, at block 206, when the below-freezing flag is "1," the anode pressure increase rate calculated at block 205 is outputted, or when the below-freezing flag is "0," the reference pressure increase rate calculated at block 201 is outputted.

Incidentally, when the below-freezing flag is "1," the wetting flag is "1'" and the power generation stop duration is long, the calculated anode pressure increase rate has a value obtained by multiplying the reference pressure increase rate by all the third, fourth and fifth correction coefficients (that is, the anode pressure increase rate = the reference pressure increase rate × the third correction coefficient × the fourth correction coefficient × the fifth correction coefficient), which is a minimum value. The minimum value is set based on experiment or design so that the fuel cell stack 1 can be established as the fuel cell even if the above-described situation arises in environment at a possible lower limit temperature (e.g. -20°C). The minimum value varies according to how an electric current is extracted from the fuel cell stack 1 after starting, structural features of the individual fuel cell stacks 1 (e.g. the configuration and layout, the number of fuel cells, the length of the gas flow path, etc.), and so on. As an example of the minimum value, the anode pressure is increased from 0 [kPaG] to 150 [kPaG] for about 0,5 [sec] thereby to permit establishing the fuel cell.

When the anode pressure increase rate (or the target pressure increase rate) is calculated as described above, then at step S304, the controller 40 detects the actual hydrogen gas pressure by reading the sensor signal from the hydrogen gas pressure sensor 41.

Then, at step S305, the controller 40 drives the hydrogen gas pressure regulating valve 11, using the target upper limit pressure (or the anode upper limit pressure) set at step S301, the target lower limit pressure (or the anode lower limit pressure) set at step S302, the target pressure increase rate (or the anode pressure increase rate) set at step S303, and the actual hydrogen gas pressure detected at step S304.

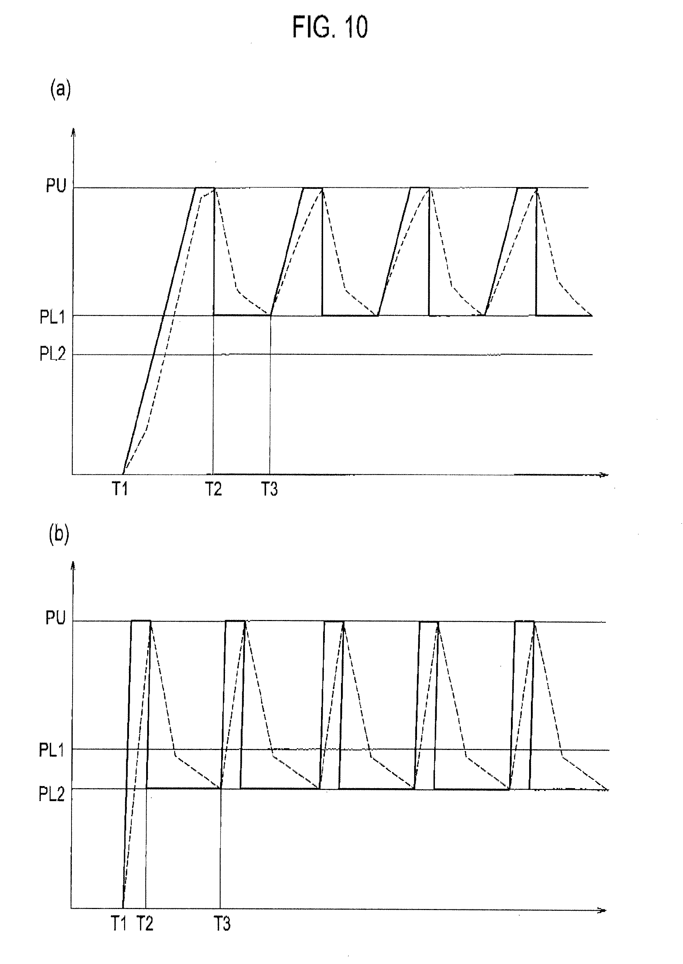

Description will now be given with regard to specific examples of movements of the target hydrogen gas pressure and the actual hydrogen gas pressure when the controller 40 drives the hydrogen gas pressure regulating valve 11, using a timing chart of Fig. 10. Fig. 10(a) shows changes in the target hydrogen gas pressure and the actual hydrogen gas pressure under conditions where the below-freezing flag is "1," the purge failure flag is "1" and the wetting flag is "0." Fig. 10(b) shows changes in the target hydrogen gas pressure and the actual hydrogen gas pressure under conditions where the below-freezing flag is "0" and the purge failure flag is "0." Incidentally, other conditions such as the target generated current are common to Figs. 10(a) and 10(b). In Fig. 10, solid lines show the changes in the target hydrogen gas pressure, and broken lines show the changes in the actual hydrogen gas pressure.

In Fig. 10(a), first, when the supply of the hydrogen gas starts at time T1, the target hydrogen gas pressure is increased stepwise to the target upper limit pressure PU set at step S301 at the anode pressure increase rate set at step 5303. Then, the hydrogen gas pressure regulating valve 11 is driven so that the actual hydrogen gas pressure matches the target hydrogen gas pressure. Here, opening and closing operation of the hydrogen gas pressure regulating valve 11 is controlled using feedback control such as PI control (proportional-plus-integral control), based on a deviation of the actual hydrogen gas pressure from the target hydrogen gas pressure.

Then, at time T2, a process for reducing the target hydrogen gas pressure is performed to decrease the actual hydrogen gas pressure. Here, when the deviation of the actual hydrogen gas pressure from the target upper limit pressure PU falls within a control error range, the target hydrogen gas pressure is reduced to the target lower limit pressure PL1. After the target hydrogen gas pressure has been reduced to the target lower limit pressure PL1, the actual hydrogen gas pressure in the fuel cell stack 1 drops by hydrogen consumption by electric power generation.

Then, at time T3, a process for increasing the target hydrogen gas pressure is performed to increase again the actual hydrogen gas pressure. Here, when a deviation of the actual hydrogen gas pressure from the target lower limit pressure PL1 falls within a control error range, the target hydrogen gas pressure is increased to the target upper limit pressure PU set at step S301, while maintaining the anode pressure increase rate set at step S303.

Thereafter, pressure increase/decrease operation is repeatedly performed by repeating the same processes as those performed at time T2 and T3. Incidentally, here, the target hydrogen gas pressure is instantaneously reduced from the target upper limit pressure PU to the target lower limit pressure PL1; however, also when shifting toward lower pressure, the target hydrogen gas pressure may be reduced while restricting a pressure decrease rate. The pressure decrease rate thus restricted enables suppression of a pressure change in the volume part 12 per unit time during pressure decrease and hence suppression of gas turbulence in the volume part 12, which in turn enables prevention of backflow of an inactive gas such as a nitrogen gas to the fuel cell stack 1, thus leading to suppression of the power generation degradation due to the deficiency in the partial pressure of the hydrogen in the anode catalyst layer.

In Fig. 10(b), the below-freezing flag is "0" and the purge failure flag is "0," and thus, the reference target lower limit pressure is set as the target lower limit pressure PL2, and the reference pressure increase rate is set as the anode pressure increase rate. First, when the supply of the hydrogen gas starts at time T1, the target hydrogen gas pressure is instantaneously increased to the target upper limit pressure PU set at step S301 at the reference pressure increase rate set at step S303. Then, the hydrogen gas pressure regulating valve 11 is driven so that the actual hydrogen gas pressure matches the target hydrogen gas pressure.

Then, at time T2, the process for reducing the target hydrogen gas pressure is performed to decrease the actual hydrogen gas pressure. Here, when the deviation of the actual hydrogen gas pressure from the target upper limit pressure PU falls within the control error range, the target hydrogen gas pressure is reduced to the target lower limit pressure PL2, that is, the reference target lower limit pressure.

Then, at time T3, the process for increasing the target hydrogen gas pressure is performed to increase again the actual hydrogen gas pressure. Here, when a deviation of the actual hydrogen gas pressure from the target lower limit pressure PL2 falls within a control error range, the target hydrogen gas pressure is increased at the reference pressure increase rate set at step S303.

Thereafter, the pressure increase/decrease operation is repeatedly performed by repeating the same processes as those performed at time T2 and T3. Incidentally, the anode pressure increase rate as used in Fig. 10(b) is higher than that as used in Fig. 10(a), and thus, the time interval between T1 and T2 in Fig. 10(b) tends to become shorter than that in Fig. 10(a). Meanwhile, the target lower limit pressure PL2 is lower than the target lower limit pressure PL1, and thus, the time interval between T2 and T3 in Fig. 10(b) tends to become longer than that in Fig. 10(a).

Incidentally, in the embodiment, the pressure increase to the target upper limit pressure (or the pressure decrease to the target lower limit pressure) takes place at a constant pressure increase rate (or pressure decrease rate); however, the pattern of the pressure increase (or the pressure decrease) is not so limited, and, for example, the pressure increase rate (or the pressure decrease rate) may undergo one or more changes in the course of the pressure increase (or the pressure decrease) to the target upper limit pressure (or the target lower limit pressure) thereby to effect a smooth change in the anode pressure. Also, the pressure increase rate (or the pressure decrease rate) may be defined as an average rate of change of the anode pressure during the pressure increase from the target lower limit pressure to the target upper limit pressure (or during the pressure decrease from the target upper limit pressure to the target lower limit pressure), or may be defined as the rate of change of the anode pressure per unit time at a given point in time.

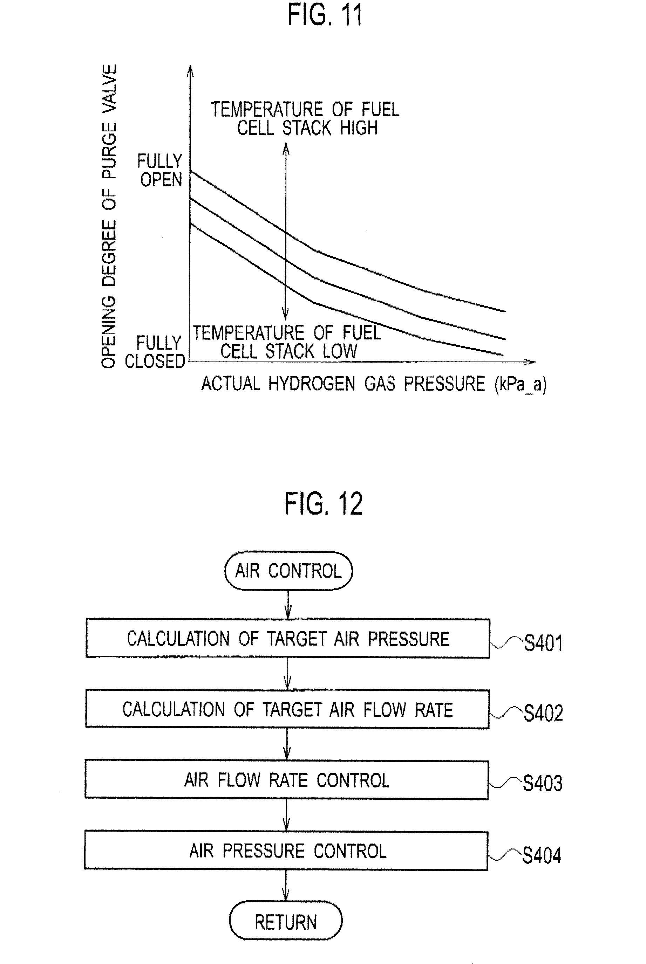

Then, at step S306, the controller 40 effects the opening and closing operation of the purge valve 14 to discharge an inactive gas such as a nitrogen gas discharged into the volume part 12, into the atmosphere. Here, when the purge failure flag is "1," the purge valve 14 may possibly be fixedly closed and thus unable to discharge the inactive gas such as the nitrogen gas, and therefore, a command to close is given to the purge valve 14 in order to avoid waste of hydrogen discharge. Meanwhile, when the purge failure flag is "0," at all times, a command to open is given to the purge valve 14 for a time long enough to discharge the inactive gas such as the nitrogen gas into the atmosphere. Also, after a lapse of the time long enough to discharge the inactive gas such as the nitrogen gas from the fuel cell stack 1, as shown in Fig. 11, the opening and closing operation of the purge valve 14 is controlled based on the temperature of the fuel cell stack 1 detected by the stack temperature sensor 43 and the actual hydrogen gas pressure detected by the hydrogen gas pressure sensor 41, thereby to enable discharging the nitrogen gas penetrating from the cathode as well as reducing the hydrogen discharge to a required minimum, thus leading to an improvement in fuel efficiency. At this point, the hydrogen control process comes to an end.

Incidentally, as shown in Fig. 1, the anode gas control unit 55 of the controller 40 includes an anode upper/lower limit pressure setting unit 61, an anode pressure increase rate setting unit 62, and an anode gas pressure increase/decrease control unit 63, and, for example, steps S301 and S302 may be executed by the anode upper/lower limit pressure setting unit 61; step S303, the anode pressure increase rate setting unit 62; and step S305, the anode gas pressure increase/decrease control unit 63.

Fig. 12 is a flowchart showing details of an air control process at step S107 of Fig. 2. Description will be given below in further detail with regard to a method for controlling the supply of the air to the cathode, following the flowchart of Fig. 12.

When the flow of Fig. 12 starts, first at step S401, the controller 40 performs calculation of a target air pressure. Here, for purposes of improvement in durability, an average value of the target upper limit pressure calculated at step S301 of Fig. 6 and the target lower limit pressure calculated at step S302 is set as the target air pressure thereby to reduce the membrane-membrane differential pressure between the cathode and the anode of the fuel cell stack 1 to the allowable withstand pressure or lower.

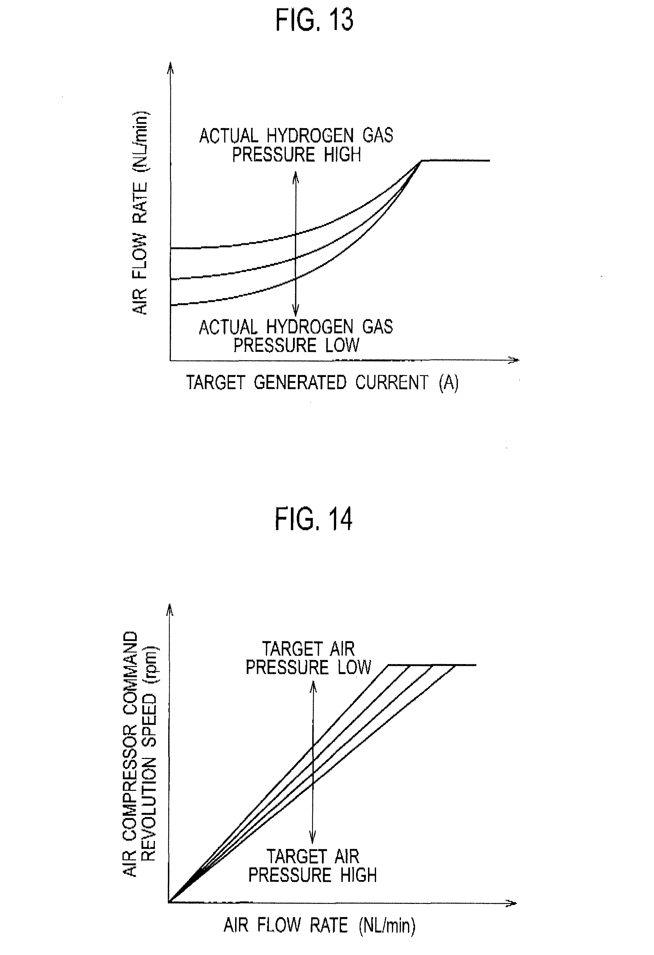

Then, at step S402, the controller 40 performs calculation of a target air flow rate. Here, the target air flow rate is determined by calculating an air flow rate that permits discharging the gas from the purge valve 14 into the atmosphere with the concentration of hydrogen in the gas equal to or lower than combustible concentration while supplying the air required for electric power generation of the fuel cell stack 1, using map data based on the target generated current calculated at step S101 of Fig. 2 and the actual hydrogen gas pressure detected at step S304 of Fig. 6, as shown in Fig. 13.

Then, at step S403, the controller 40 calculates air compressor command revolution speed, using map data shown in Fig. 14, based on the target air flow rate calculated at step S402 and the target air pressure calculated at step S401. Incidentally, the map data is set based on characteristics of the air flow rate relative to the revolution speed and pressure ratio of the air compressor 20. The air compressor 20 is driven according to the air compressor command revolution speed here calculated thereby to control the rate of flow of the air supplied to the cathode of the fuel cell stack 1.

Then, at step S404, the controller 40 performs air pressure control. Here, opening and closing operation of the air pressure regulating valve 22 is performed by performing feedback control based on a deviation of actual air pressure from the target air pressure, in order that the actual air pressure detected by the air pressure sensor 42 matches the target air pressure calculated at step S401. At this point, the air control process comes to an end.

As described in detail above by the specific examples, according to the fuel cell system of the embodiment, the controller 40 executes the hydrogen control process shown in Fig. 6, in which the anode pressure increase rate (or the target pressure increase rate calculated at step S303) is set to a variable according to the temperature of the fuel cell stack 1 detected by the stack temperature sensor 43, and, when the temperature of the fuel cell stack 1 is lower than the predetermined temperature, the anode pressure increase rate is set at a slower rate than when the temperature of the fuel cell stack 1 is equal to or higher than the predetermined temperature. Thus, even in low-temperature environments including below-freezing conditions, the supply of the anode gas enables a proper discharge of the inactive gas within the fuel cell stack 1 into the volume part 12 external to the fuel cell stack 1, and hence enables effective suppression of the power generation degradation due to the deficiency in the partial pressure of the hydrogen in the anode catalyst layer, thereby achieving improvements in power generation characteristics of the fuel cell stack 1.

Specifically, the anode non-circulation type system has difficulty in short-time discharge of impurities such as a nitrogen gas that can possibly cause the power generation degradation, considering that the concentration of the hydrogen discharged to the outside needs to be equal to or lower than the combustible concentration and, in addition, that the purge valve 14 for discharge of the impurities may possibly be failing due to the influence of freezing or the like; however, even in such cases, the hydrogen gas is supplied to force the impurities including the nitrogen gas before the supply of a fuel gas, into the volume part 12 downstream from the fuel cell stack 1, and thereby enable achieving good power generation performance.

However, in low-temperature environments including below-freezing environments, the influence of freezing of remaining water or the like renders it difficult to discharge water with which the inside of a gas diffusion layer (GDL) or the like is clogged. In this case, even if the anode gas is supplied to the anode gas flow path, the presence of the remaining water presents an obstacle and renders it difficult to force-feed the hydrogen to the anode catalyst layer and also to diffuse the inactive gas remaining in the anode catalyst layer toward the anode gas flow path. Further, if cell-to-cell variation in the amount of remaining water occurs, a difference in pressure loss between cells is likely to arise at the time of the supply of the hydrogen gas. Therefore, in the anode non-circulation type system that can supply the hydrogen gas only at pressure equal to or lower than the allowable withstand pressure, if the rate of supply of the anode gas is too fast, the supplied anode gas flows through the anode gas flow path superficially above a surface layer of the gas diffusion layer with the anode gas insufficiently penetrating into the gas diffusion layer and also insufficiently replacing the inactive gas remaining in the anode catalyst layer, and thus, the impurities in the anode catalyst layer cannot be sufficiently forced into the volume part downstream from the fuel cell, which in turn increases the likelihood of occurrence of the power generation degradation due to the deficiency in the partial pressure of the hydrogen in the anode catalyst layer.

In the fuel cell system of the embodiment, when the temperature of the fuel cell stack 1 is lower than the predetermined temperature, indicating that the temperature of the fuel cell stack 1 is in the low-temperature state including the below-freezing state, the anode pressure increase rate is set at the slower rate, and thus, for the same amount of hydrogen gas supplied, the time taken to force the inactive gas to flow downstream through the anode gas flow path while diffusing the inactive gas remaining in the anode catalyst layer toward the anode gas flow path can become long. Also, a flow velocity of the flow of gas through the anode becomes low, and thus, a difference between the pressure loss of the flow of gas through the anode gas flow path and the pressure loss of the flow of gas through the gas diffusion layer becomes small, so that the anode gas can penetrate into the anode catalyst layer, while sufficiently replacing the inactive gas remaining in the anode catalyst layer. Therefore, according to the fuel cell system of the embodiment, the factors that can possibly cause the power generation degradation under low-temperature conditions can be suppressed, and thus, the power generation characteristics of the fuel cell stack 1 in low-temperature environments can be improved.

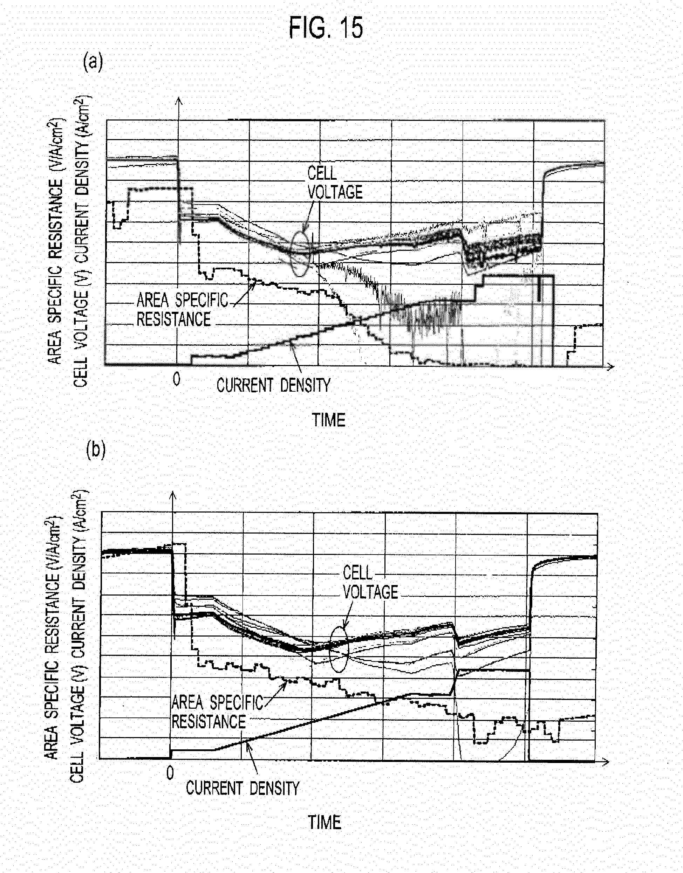

Fig. 15 is a graph showing sensitivity to the anode pressure increase rate, of the power generation characteristics of the fuel cell stack 1 at the time of starting below freezing. Fig. 15(a) shows the power generation characteristics when the anode pressure is increased instantaneously (for example, from 0 to 150 [kPaG] for about 0.5 [see]), and Fig. 15(b) shows the power generation characteristics when the anode pressure is increased gradually (for example, from 0 to 150 [kPaG] for about 10 [sec]). Thin solid lines in Fig. 15 show changes in voltages (or cell voltages) of the fuel cells that form the fuel cell stack 1. Thick solid lines in Fig. 15 show changes in current density (which is an average value of current densities of all fuel cells, that is, a value obtained by dividing an electric current extracted from the fuel cell stack 1 by the total area of power generation regions of the fuel cells). The pattern of the current density is common to Figs. 15(a) and 15(b). Thick broken lines in Fig. 15 show changes in area specific resistance (that is a value obtained by dividing an average value of the cell voltages by the current density) of the fuel cells. From Fig. 15, it can be seen that cell-to-cell variation in the cell voltages in Fig, 15(b) is smaller than that in Fig. 15(a), the change in the area specific resistance in Fig. 15(b) also stabilizes throughout at larger value than that in Fig. 15(a), and thus, in low-temperature environments, the anode pressure increase rate set at the slower rate improves the power generation characteristics of the fuel cell stack 1.

Also, when the supply of the hydrogen gas starts under a condition where at the time of starting of the fuel cell system both the anode and the cathode are contaminated with oxygen, the hydrogen front is formed in the anode, and then, in the region where the hydrogen is supplied to the anode, the same reaction as that under normal operating conditions occurs to develop a potential on the cathode side, while, in the region where the hydrogen is absent from the anode, the reaction represented as the above formula (3) occurs on the cathode side facing this region, resulting in the occurrence of the corrosion of the carbon carrier carrying the catalyst such as platinum (Pt), or the like. In the reaction of the formula (3), the electrode is low in activity under low-temperature conditions, and thus, the carbon corrosion does not tend to occur under the low-temperature conditions. Meanwhile, in the reaction of the formula (3), the electrode becomes higher in activity as the temperature becomes higher, and thus, the carbon corrosion also is more likely to occur as the temperature becomes higher.

In the fuel cell system of the embodiment, when the temperature of the fuel cell stack 1 is equal to or higher than the predetermined temperature, the anode pressure increase rate is set at a faster rate to thus enable suppressing deterioration by the carbon corrosion due to the formation of the hydrogen front in the fuel cell stack 1 and thereby enable improving the power generation characteristics of the fuel cell stack 1.

Specifically, in the fuel cell system of the embodiment, when the temperature of the fuel cell stack 1 is lower than the predetermined temperature, indicating that the temperature of the fuel cell stack 1 is in the low-temperature state including the below-freezing state, the anode pressure increase rate is set at the slower rate, while when the temperature of the fuel cell stack 1 is equal to or higher than the predetermined temperature, the anode pressure increase rate is set at the faster rate. This enables both suppression of the deterioration by the carbon corrosion due to the formation of the hydrogen front in the fuel cell stack 1, and suppression of the factors that can possibly cause the power generation degradation under low-temperature conditions, and thus enables improving the power generation characteristics of the fuel cell stack 1 used in low-temperature environments.

Also, generally, in the anode non-circulation type system, it is required that the volume part downstream from the fuel cell stack 1 have a large volume in order to continue the flow of gas through the anode for a long time and thereby extend the duration of electric power generation. According to the fuel cell system of the embodiment, the anode pressure increase rate is set at the slower rate, and thus, for the same amount of hydrogen gas supplied, the flow of gas through the anode can be continued for a relatively long time to, therefore, enable achieving size reduction of the volume part downstream from the fuel cell stack 1 and thus making the overall system compact.

Further, according to the fuel cell system of the embodiment, before the execution of the hydrogen control process, the controller 40 determines the state of the amount of water remaining in the fuel cell stack 1 (at step S104 of Fig. 2), and, in the case where the anode pressure increase rate is set at the slower rate since the temperature of the fuel cell stack 1 is lower than the predetermined temperature, the anode pressure increase rate is set to be faster as the amount of water remaining in the anode becomes smaller. Thus, even in low-temperature environments, under a condition where there is a small amount of water remaining in the anode, power generation response of the fuel cell stack 1 is enhanced to thus enable improving the power generation characteristics of the fuel cell stack 1 in the low-temperature environments.

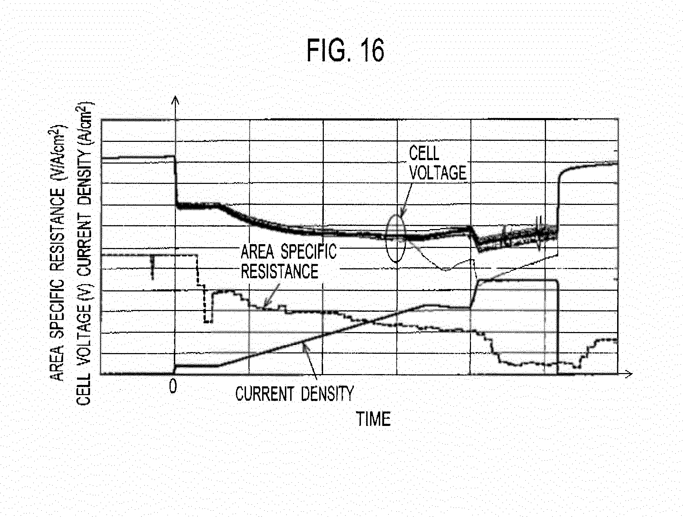

Fig. 16 is a graph showing sensitivity to the amount of water remaining in the anode, of the power generation characteristics of the fuel cell stack 1 at the time of starting below freezing, and shows the power generation characteristics when the anode pressure is increased instantaneously (for example, from 0 to 150 [kPaG] for about 0.5 [see]), as is the case with Fig. 15(a). The point of difference between Fig. 16 and Fig. 15(a) is that the drying process during the previous power generation stop process in the case of Fig. 16 has been carried out for a longer time than that in the case of Fig. 15(a). As in the case of Fig. 15, thin solid lines in Fig. 16 show changes in voltages (or cell voltages) of the fuel cells that form the fuel cell stack 1, a thick solid line in Fig. 16 shows a change in current density, and a thick broken line in Fig. 16 shows a change in area specific resistance of the fuel cells. Also, the pattern of the current density is common to Fig. 16 and Figs. 15(a) and 15(b). From Fig. 16, it can be seen that cell-to-cell variation in the cell voltages in Fig. 16 is smaller than that in Fig. 15(a), the change in the area specific resistance in Fig. 16 also stabilizes throughout at larger value than that in Fig. 15(a), and thus, even in low-temperature environments, under a condition where there is a small amount of water remaining in the anode, setting the anode pressure increase rate faster enables achieving more excellent power generation characteristics of the fuel cell stack 1.

Also, in the fuel cell stack 1 of the embodiment, after the stop of power generation, additional water produced by the power generation is not formed in the fuel cell stack 1; however, water remaining in the fuel cell stack 1 diffuses, flows or otherwise moves through the fuel cell stack 1 with lapse of time after the stop of the power generation, thus causing a change in the distribution of water in the fuel cell stack 1. As the elapsed time since the stop of the power generation becomes longer, the change in the distribution of water becomes greater, and the remaining water spreads over a wider range in the power generation regions of the fuel cells. In other words, after the stop of the power generation, as the time it takes the fuel cell stack 1 to reach the below-freezing state becomes longer, the frozen remaining water is distributed over a wider range in the power generation regions of the fuel cells.

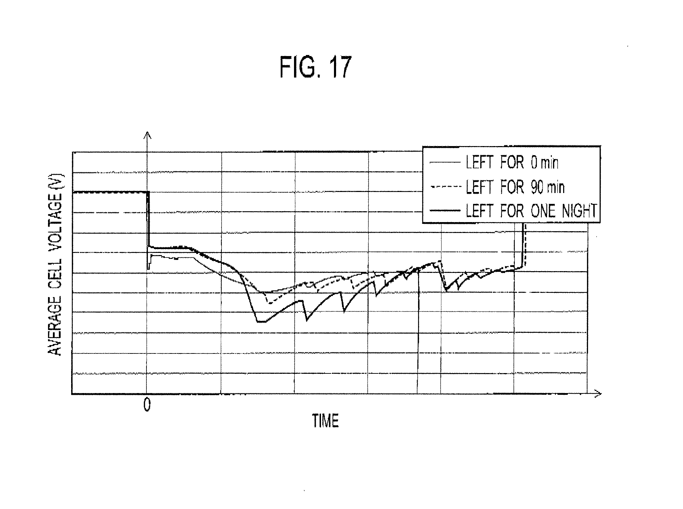

Fig. 17 is a graph showing sensitivity to a period of time during which the fuel cell stack 1 is allowed to stand (that is, the time it takes the fuel cell stack 1 to reach the below-freezing state after the stop of power generation), of the power generation characteristics of the fuel cell stack 1 at the time of starting below freezing. In Fig. 17, a thin solid line shows a change in average cell voltage (which is an average value of cell voltages) at the time of starting after the fuel cell stack 1 has been allowed to stand for 0 minute, a broken line shows a change in average cell voltage at the time of starting after the fuel cell stack 1 has been allowed to stand for 90 minutes, and a thick solid line shows a change in average cell voltage at the time of starting after the fuel cell stack 1 has been allowed to stand for one night. Incidentally, other operating conditions (e.g. the pattern of the current density, the anode pressure, the anode pressure increase rate, etc.) are common to these cases. As shown in Fig. 17, the average cell voltage at the time of starting becomes lower as the elapsed time since the stop of the power generation becomes longer, and it is inferred that the distribution of remaining water in the fuel cell stack 1 has affected the power generation characteristics of the fuel cell stack 1.

According to the fuel cell system of the embodiment, before the execution of the hydrogen control process, the controller 40 measures or estimates the duration of power generation stop of the fuel cell stack 1 (at step S105 of Fig. 2), and, in the case where the anode rate is set at the slower rate since the temperature of the fuel cell stack 1 is lower than the predetermined temperature, the anode pressure increase rate is set to be faster as the duration of power generation stop of the fuel cell stack 1 becomes shorter. Thus, even in low-temperature environments, under a condition where the duration of power generation stop is short, the power generation response of the fuel cell stack 1 is enhanced to thus enable improving the power generation characteristics of the fuel cell stack 1 in the low-temperature environments.

Also, generally, the amount of gas diffusion is determined by Equation (4).

$$\text{Amount of gas diffusion} = - \text{ diffusion coefficient (D)} \times \text{concentration gradient} \quad (4)$$

Here, the diffusion coefficient (D) generally has a relationship with temperature (T), as expressed by Equation (5).

$$\text{Diffusion coefficient (D)} \propto \text{temperature (T)}^{2/3} / \text{collision integral } (\Omega_D) \quad (5)$$

In environment at a possible lower limit temperature (e.g. -20°C) as a usage environment for the fuel cell stack 1, it is expected from Equation (5) that the diffusion coefficient (D) decreases to about 60% of the diffusion coefficient in environment at a normal temperature (e.g. 20°C), and also, it is expected from Equation (4) that the amount of gas diffusion decreases by about the same percentage as the diffusion coefficient. Further, when the fuel cell stack 1 reaches the below-freezing state under a condition where water remaining in the anode is not completely eliminated, the freezing of the remaining water reduces a range (or an area) of the anode catalyst layer in which the hydrogen gas can be diffused, and thus, it is possible that the amount of hydrogen reaching the anode catalyst layer decreases by the percentage of decrease in the amount of gas diffusion or higher.

According to the fuel cell system of the embodiment, the controller 40 executes the hydrogen control process shown in Fig. 6, in which the anode lower limit pressure (or the target lower limit pressure calculated at step S302) is set to a variable according to the temperature of the fuel cell stack 1 detected by the stack temperature sensor 43, and, when the temperature of the fuel cell stack 1 is lower than the predetermined temperature, the anode lower limit pressure is set at a higher value than when the temperature of the fuel cell stack 1 is equal to or higher than the predetermined temperature. Thus, even when the fuel cell stack 1 is in the below-freezing state, the hydrogen more easily reaches into the anode catalyst layer to thus ensure the partial pressure of the hydrogen in the anode catalyst layer and hence suppress the factors that can possibly cause the power generation degradation, thereby enabling the improvements in the power generation characteristics of the fuel cell stack 1 in low-temperature environments.

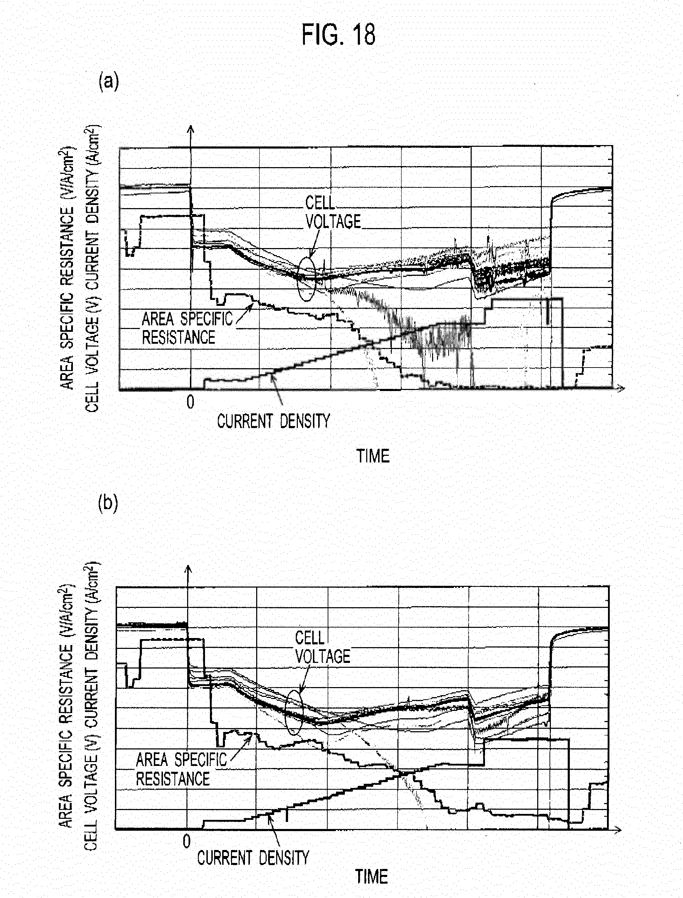

Fig. 18 is a graph showing anode pressure sensitivity of the power generation characteristics of the fuel cell stack 1 at the time of starting below freezing. Fig. 18(a) shows the power generation characteristics when the anode pressure is increased to 150 [kPaG], and Fig. 18(b) shows the power generation characteristics when the anode pressure is increased to 200 [kPaG]. Incidentally, the time taken to increase the pressure in Figs. 18(a) and 18(b) is the same as that in Fig. 15(a), which is about 0.5 [sec]. As in the case of Figs. 15 and 16, thin solid lines in Fig. 18 show changes in voltages (or cell voltages) of the fuel cells that form the fuel cell stack 1, thick solid lines in Fig. 18 show changes in current density, and thick broken lines in Fig. 18 show changes in area specific resistance of the fuel cells. Also, the pattern of the current density is common to Fig. 18 and Figs. 15 and 16. From Fig. 18, it can be seen that cell-to-cell variation in the cell voltages in Fig. 18(b) is smaller than that in Fig. 18(a), the change in the area specific resistance in Fig. 18(b) also stabilizes throughout at larger value than that in Fig. 18(a), and thus, in low-temperature environments, setting the anode lower limit pressure higher improves the power generation characteristics of the fuel cell stack 1.

Meanwhile, the amount of gas penetrating from one to another of the cathode and the anode tends to become larger as the temperature of the fuel cell stack 1 becomes higher, and thus, impurities that can possibly inhibit electric power generation, such as a nitrogen gas and a steam gas penetrating from the cathode side into the anode side, needs to be discharged in a shorter time as the temperature of the fuel cell stack 1 becomes higher; otherwise, the power generation degradation due to the deficiency in the partial pressure of the hydrogen in the anode catalyst layer may possibly occur.

According to the fuel cell system of the embodiment, when the temperature of the fuel cell stack 1 is equal to or higher than the predetermined temperature, the anode lower limit pressure is set at a lower pressure, and thus, a pressure difference from the anode upper limit pressure is large, so that the impurities such as the nitrogen gas and the steam gas in the anode can be efficiently discharged in a short time into the volume part 12 located downstream. In other words, the fuel cell system of the embodiment efficiently ensures the partial pressure of the hydrogen in the anode catalyst layer according to the temperature of the fuel cell stack 1, thereby suppressing the factors that can possibly cause the power generation degradation, and thus enabling improving the power generation characteristics of the fuel cell stack 1 in low-temperature environments.

Also, according to the fuel cell system of the embodiment, when the temperature of the fuel cell stack 1 is lower than the predetermined temperature, the anode lower limit pressure is set to a higher value than when the temperature of the fuel cell stack 1 is equal to or higher than the predetermined temperature, and thereby, the anode pressure is maintained at a relatively high value. Thus, while the backflow of the imparities forced into the volume part 12, into the anode, is effectively suppressed thereby to suppress the deterioration by the carbon corrosion due to the formation of the hydrogen front resulting from the backflow of the impurities, the partial pressure of the hydrogen in the anode catalyst layer is ensured thereby to suppress the factors that can possibly cause the power generation degradation, and thus enable improving the power generation characteristics of the fuel cell stack 1 in low-temperature environments.

Further, in the fuel cell system of the embodiment, before the controller 40 executes the hydrogen control process, it is determined whether or not the purge valve 14 is failing due to freezing (at step S103 of Fig. 2), and when the purge valve 14 is determined to be failing, the anode lower limit pressure is set at a higher pressure than when the purge valve 14 is determined to be not failing. Thus, improvements in the power generation characteristics of the fuel cell in the low-temperature environment can be achieved by ensuring the partial pressure of the hydrogen in the anode catalyst layer and thus suppressing the factors that can possibly cause the power generation degradation, while effectively suppressing the deterioration by the carbon corrosion due to the formation of the hydrogen front in the fuel cell stack 1 resulting from the backflow of the anode gas, which can possibly be caused when the purge valve 14 is failing.

Specifically, when the purge valve 14 installed downstream from the anode is failing due to freezing, the impurities such as the nitrogen gas and the steam gas forced into the volume part 12 downstream from the fuel cell stack 1 cannot be properly discharged downstream from the purge valve 14. In this case, with a lapse of time, the impurities tend to flow back into the anode due to the influence of repeated increase and decrease in the anode pressure, gas diffusion, or the like, and the backflow of the impurities can possibly cause the power generation degradation due to the deficiency in the partial pressure of the hydrogen in the anode catalyst layer, the deterioration by the carbon corrosion due to the formation of the hydrogen front, or the like.

According to the fuel cell system of the embodiment, when the purge valve 14 is determined to be failing, the anode lower limit pressure is set at a high pressure thereby to maintain the anode pressure at a relatively high value. Thus, the improvements in the power generation characteristics of the fuel cell stack 1 in the low-temperature environment can be achieved by ensuring the partial pressure of the hydrogen in the anode catalyst layer and thus suppressing the factors that can possibly cause the power generation degradation, while effectively presenting the impurities forced into the volume part 12 from flowing back into the anode, and thus effectively suppressing the deterioration by the carbon corrosion due to the formation of the hydrogen front resulting from the backflow of the impurities.

Although the embodiments of the present invention have been described above, it is to be understood that these embodiments are illustrative only in order to facilitate the understanding of the present invention, and the present invention is not limited to the embodiments. The technical scope of the present invention is not limited to specific technical matters disclosed in the above-described embodiments but may cover various modifications, changes, alternative techniques, and others that can be readily derived therefrom.

This application is based upon and claims the benefit of priority from the prior Japanese Patent Application No. P2009-214321, filed on September 16, 2009; the entire contents of which are incorporated herein by reference.

INDUSTRIAL APPLICABILITY

According to the present invention, when the temperature of the fuel cell is lower than the predetermined temperature, the anode pressure increase rate is set at a slower rate than when the temperature of the fuel cell is equal to or higher than the predetermined temperature. Thus, even in the low-temperature environment including the below-freezing condition, the supply of the anode gas enables a proper discharge of the inactive gas inside the fuel cell into the volume part outside the fuel cell, thus effective suppression of the power generation degradation due to the deficiency in the partial pressure of the hydrogen in the anode catalyst layer, and thus improvements in the power generation characteristics of the fuel cell.

REFERENCE SIGNS LIST

1       FUEL CELL STACK
11      HYDROGEN GAS PRESSURE REGULATING VALVE
12      VOLUME PART
14      PURGE VALVE
40      CONTROLLER
41      HYDROGEN GAS PRESSURE SENSOR
43      STACK TEMPERATURE SENSOR
44      PURGE VALVE TEMPERATURE SENSOR


**Claims**

1.  A control device for an anode non-circulation type fuel cell system including a fuel cell, a volume part capable of temporarily storing an anode off-gas discharged from the fuel cell, a discharging device for discharging the anode off-gas to an outside, and a temperature detector for detecting a temperature of the fuel cell,
    the control device comprising an anode gas supply control unit which controls the supply of an anode gas to the fuel cell,
    the anode gas supply control unit comprising:

    an anode upper/lower limit pressure setting unit which sets an anode upper limit pressure and an anode lower limit pressure;
    an anode pressure increase rate setting unit which sets an anode pressure increase rate based on at least the temperature of the fuel cell detected by the temperature detector; and
    an anode gas pressure increase/decrease control unit which repeats pressure increase and pressure decrease, the pressure increase being conducted by supplying the anode gas to the anode upper limit pressure at the anode pressure increase rate, the pressure decrease being conducted by restricting the supply of the anode gas to the anode lower limit pressure,
    wherein when the temperature of the fuel cell detected by the temperature detector is lower than a predetermined temperature, the anode pressure increase rate setting unit sets the anode pressure increase rate at a slower rate than when the temperature of the fuel cell is equal to or higher than the predetermined temperature.

2.  The control device for the fuel cell system according to claim 1, further comprising an anode remaining water amount estimation unit which estimates an amount of water remaining in an anode of the fuel cell,
    wherein when the temperature of the fuel cell detected by the temperature detector is lower than the predetermined temperature, the anode pressure increase rate setting unit sets the anode pressure increase rate to be faster as the amount of water remaining in the anode estimated by the anode remaining water amount estimation unit becomes smaller.

3.  The control device for the fuel cell system according to any one of claims 1 and 2, further comprising a power generation stop duration calculation unit which measures or estimates a duration of power generation stop of the fuel cell,
    wherein when the temperature of the fuel cell detected by the temperature detector is lower than the predetermined temperature, the anode pressure increase rate setting unit sets the anode pressure increase rate to be faster as the duration of power generation stop of the fuel cell measured or estimated by the power generation stop duration calculation unit becomes shorter.

4. The control device for the fuel cell system according to any one of claims 1 to 3, wherein when the temperature of the fuel cell detected by the temperature detector is lower than the predetermined temperature, the anode upper/lower limit pressure setting unit sets the anode lower limit pressure to a higher value than when the temperature of the fuel cell is equal to or higher than the predetermined temperature.

5. The control device for the fuel cell system according to any one of claims 1 to 4, further comprising a purge failure determination unit which determines whether or not the discharging device is failing due to freezing,
wherein when the discharging device is determined to be failing by the purge failure determination unit, the anode upper/lower limit pressure setting unit sets the anode lower limit pressure to a higher value than when the discharging device is not determined to be failing by the purge failure determination unit.

6. A control method for an anode non-circulation type fuel cell system including a fuel cell, a volume part capable of temporarily storing an anode off-gas discharged from the fuel cell, and a discharging device for discharging the anode off-gas to an outside,
the control method comprising the steps of:

detecting a temperature of the fuel cell;
setting an anode upper limit pressure and an anode lower limit pressure;
setting an anode pressure increase rate based on at least the detected temperature of the fuel cell; and
supplying an anode gas to the fuel cell in such a manner as to repeat pressure increase and pressure decrease, the pressure increase being conducted by supplying the anode gas to the anode upper limit pressure at the anode pressure increase rate, the pressure decrease being conducted by restricting the supply of the anode gas to the anode lower limit pressure,
wherein when the detected temperature of the fuel cell is lower than a predetermined temperature, the anode pressure increase rate is set at a slower rate than when the temperature of the fuel cell is equal to or higher than the predetermined temperature.

FIG. 1

CONTROLLER 55 40

LOW-TEMPERATURE STATE DETERMINATION UNIT 51

PURGE FAILURE DETERMINATION UNIT 52

ANODE REMAINING WATER AMOUNT ESTIMATION UNIT 53

POWER GENERATION STOP DURATION CALCULATION UNIT 54

ANODE GAS SUPPLY CONTROL UNIT

ANODE UPPER/LOWER LIMIT PRESSURE SETTING UNIT 61

ANODE PRESSURE INCREASE RATE SETTING UNIT 62

ANODE GAS PRESSURE INCREASE/ DECREASE CONTROL UNIT 63

M

20

OUTPUT EXTRACTION DEVICE 30

L5

22

L6

21

L2

P 42

44 T

14

10

L1

P 41

FUEL TANK

11

FUEL CELL STACK

T 43

1

L2

VOLUME PART 12

L3

13

EP 2 479 825 A1

# FIG. 2

```
                    ┌─────────┐
                    │  START  │
                    └─────────┘
                         │
                         ▼
        ┌─║─────────────────────────────║─┐
        │ ║ CALCULATION OF TARGET       ║ │──S101
        │ ║   GENERATED CURRENT         ║ │
        └─║─────────────────────────────║─┘
                         │
                         ▼
        ┌─────────────────────────────────┐
        │      DETERMINATION OF           │──S102
        │    LOW-TEMPERATURE STATE        │
        │     OF FUEL CELL STACK          │
        └─────────────────────────────────┘
                         │
                         ▼
        ┌─────────────────────────────────┐
        │      DETERMINATION OF           │──S103
        │    FIXEDLY CLOSED STATE         │
        │       OF PURGE VALVE            │
        └─────────────────────────────────┘
                         │
                         ▼
        ┌─────────────────────────────────┐
        │     DETERMINATION OF STATE      │──S104
        │ OF AMOUNT OF WATER REMAINING    │
        │       IN FUEL CELL STACK        │
        └─────────────────────────────────┘
                         │
                         ▼
        ┌─────────────────────────────────┐
        │   DETERMINATION OF POWER        │──S105
        │  GENERATION STOPPED STATE       │
        │     OF FUEL CELL STACK          │
        └─────────────────────────────────┘
                         │
                         ▼
        ┌─║─────────────────────────────║─┐
        │ ║      HYDROGEN CONTROL        ║ │──S106
        └─║─────────────────────────────║─┘
                         │
                         ▼
        ┌─║─────────────────────────────║─┐
        │ ║        AIR CONTROL          ║ │──S107
        └─║─────────────────────────────║─┘
                         │
                         ▼
        ┌─────────────────────────────────┐
        │   POWER GENERATION CONTROL      │──S108
        └─────────────────────────────────┘
                         │
                         ▼
                    ┌─────────┐
                    │   END   │
                    └─────────┘
```

# FIG. 3

CALCULATION OF TARGET
GENERATED CURRENT

↓

DETECTION OF AMOUNT OF
ACCELERATOR OPERATION — S201

↓

DETECTION OF VEHICLE SPEED — S202

↓

TARGET DRIVE MOTOR POWER ← MAP
(AMOUNT OF ACCELERATOR OPERATION,
VEHICLE SPEED) — S203

↓

CALCULATION OF ACTUAL AUXILIARIES
POWER CONSUMPTION — S204

↓

TARGET GENERATED POWER ←
TARGET DRIVE MOTOR POWER + ACTUAL
AUXILIARIES POWER CONSUMPTION — S205

↓

DETECTION OF TEMPERATURE
OF FUEL CELL STACK — S206

↓

TARGET GENERATED CURRENT ← MAP
(TARGET GENERATED POWER,
TEMPERATURE OF FUEL CELL STACK) — S207

↓

RETURN

20

## FIG. 4

## FIG. 5

# FIG. 6

```
         ( HYDROGEN CONTROL )
                  │
                  ▼
┌─────────────────────────────────┐
│  CALCULATION OF TARGET UPPER     │ ～S301
│        LIMIT PRESSURE            │
└─────────────────────────────────┘
                  │
                  ▼
┌─────────────────────────────────┐
│  CALCULATION OF TARGET LOWER     │ ～S302
│        LIMIT PRESSURE            │
└─────────────────────────────────┘
                  │
                  ▼
┌─────────────────────────────────┐
│  CALCULATION OF TARGET PRESSURE  │ ～S303
│         INCREASE RATE            │
└─────────────────────────────────┘
                  │
                  ▼
┌─────────────────────────────────┐
│  DETECTION OF ACTUAL HYDROGEN    │ ～S304
│         GAS PRESSURE             │
└─────────────────────────────────┘
                  │
                  ▼
┌─────────────────────────────────┐
│ DRIVING OF HYDROGEN GAS PRESSURE │ ～S305
│        REGULATING VALVE          │
└─────────────────────────────────┘
                  │
                  ▼
┌─────────────────────────────────┐
│     DRIVING OF PURGE VALVE       │ ～S306
└─────────────────────────────────┘
                  │
                  ▼
             ( RETURN )
```

# FIG. 7

# FIG. 8

# FIG. 9

# FIG. 10

(a)

(b)

# FIG. 11

Graph: OPENING DEGREE OF PURGE VALVE (vertical axis, FULLY OPEN to FULLY CLOSED) vs ACTUAL HYDROGEN GAS PRESSURE (kPa_a) (horizontal axis). Curves labeled TEMPERATURE OF FUEL CELL STACK HIGH and TEMPERATURE OF FUEL CELL STACK LOW.

# FIG. 12

Flowchart:
AIR CONTROL
→ CALCULATION OF TARGET AIR PRESSURE — S401
→ CALCULATION OF TARGET AIR FLOW RATE — S402
→ AIR FLOW RATE CONTROL — S403
→ AIR PRESSURE CONTROL — S404
→ RETURN

## FIG. 13

## FIG. 14

# FIG. 15

(a)

(b)

FIG. 16

# FIG. 17

# FIG. 18

(a)

(b)

## INTERNATIONAL SEARCH REPORT

| International application No. |
| --- |
| PCT/JP2010/063293 |

**A. CLASSIFICATION OF SUBJECT MATTER**
*H01M8/04*(2006.01)i

According to International Patent Classification (IPC) or to both national classification and IPC

**B. FIELDS SEARCHED**

Minimum documentation searched (classification system followed by classification symbols)
H01M8/04

Documentation searched other than minimum documentation to the extent that such documents are included in the fields searched
Jitsuyo Shinan Koho          1922-1996   Jitsuyo Shinan Toroku Koho    1996-2010
Kokai Jitsuyo Shinan Koho    1971-2010   Toroku Jitsuyo Shinan Koho    1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2008-97966 A  (Toyota Motor Corp.), 24 April 2008 (24.04.2008), claim 1; paragraphs [0036] to [0039], [0056] to [0058]; fig. 1 to 7 (Family: none) | 1,6 |
| A | JP 2007-227162 A  (Toyota Motor Corp.), 06 September 2007 (06.09.2007), claim 1; paragraph [0020]; fig. 1, 2 (Family: none) | 1,6 |
| A | JP 2009-129764 A  (Honda Motor Co., Ltd.), 11 June 2009 (11.06.2009), claim 1; paragraph [0011]; fig. 1 to 5 & US 2009/0136791 A1 | 1,6 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 October, 2010 (22.10.10) | 02 November, 2010 (02.11.10) |

| Name and mailing address of the ISA/ Japanese Patent Office | Authorized officer |
| --- | --- |
| Facsimile No. | Telephone No. |

Form PCT/ISA/210 (second sheet) (July 2009)

31

<table>
<tr><td colspan="3" align="center">**INTERNATIONAL SEARCH REPORT**</td><td colspan="2">International application No.<br>PCT/JP2010/063293</td></tr>
</table>

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2006-147336 A  (Nissan Motor Co., Ltd.),<br>08 June 2006 (08.06.2006),<br>claims 1, 5, 7; paragraphs [0017] to [0019]<br>(Family: none) | 1,2,6 |
| A | JP 2009-123466 A  (Honda Motor Co., Ltd.),<br>04 June 2009 (04.06.2009),<br>claim 1; paragraph [0021]<br>(Family: none) | 1,6 |
| A | JP 2006-156181 A  (Honda Motor Co., Ltd.),<br>15 June 2006 (15.06.2006),<br>claim 1; paragraphs [0015], [0016]; fig. 1 to 3<br>(Family: none) | 1,6 |
| A | JP 2006-202543 A  (Nissan Motor Co., Ltd.),<br>03 August 2006 (03.08.2006),<br>claims 1, 5, 6; paragraph [0008]<br>(Family: none) | 1,6 |
| A | JP 2006-134674 A  (Honda Motor Co., Ltd.),<br>25 May 2006 (25.05.2006),<br>claim 1; paragraphs [0025], [0032]<br>(Family: none) | 1,6 |

Form PCT/ISA/210 (continuation of second sheet) (July 2009)

**EP 2 479 825 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008097966 A
- JP P2009214321 B